# EUROPÄISCHE PATENTSCHRIFT

(11) **EP 3 880 730 B1**
(45) Veröffentlichungstag und Bekanntmachung des Hinweises auf die Patenterteilung: **26.10.2022**
(21) Anmeldenummer: 19798113.7
(22) Anmeldetag: 11.11.2019
(51) Int. Cl.: C08G 18/48, C08G 18/76, C08G 18/79, C08G 18/10, C08G 18/32, C08G 18/28, C08G 18/24, C08G 18/34

(54) **LÖSEMITTEL FÜR AROMATISCHE CARBON- ODER SULFONSÄUREN**
SOLVENT FOR AROMATIC CARBOXYLIC OR SULPHONIC ACIDS
SOLVANT POUR ACIDES CARBOXYLIQUES OU SULFONIQUES AROMATIQUES

(30) Priorität: 14.11.2018 EP 18206317
(43) Veröffentlichungstag der Anmeldung: 22.09.2021
(73) Patentinhaber: Sika Technology AG, 6340 Baar (CH)
(72) Erfinder: SCHLUMPF, Michael, 8143 Stallikon (CH); KRAMER, Andreas, 8008 Zürich (CH); BURCKHARDT, Urs, 8049 Zürich (CH)
(74) Vertreter: Sika Patent Attorneys
(86) Internationale Anmeldenummer: PCT/EP2019/080859
(87) Internationale Veröffentlichungsnummer: WO 2020/099316

(56) Entgegenhaltungen:
- EP-A1- 3 336 114
- WO-A1-2017/108834
- JP-A- 2001 026 734

## Beschreibung

### Technisches Gebiet

Die Erfindung betrifft ein Lösemittel für aromatische Carbon- oder Sulfonsäuren, die daraus erhaltenen Säurelösungen sowie härtbare Zusammensetzungen enthaltend diese, insbesondere Polyurethan-Zusammensetzungen.

### Stand der Technik

Aromatische Carbon- oder Sulfonsäuren werden oft als Katalysatoren für Polymer-Zusammensetzungen eingesetzt, beispielsweise auf Basis von Polyurethanen oder Epoxidharzen. Diese Säuren sind oft hochschmelzende Feststoffe, welche zur Verwendung in Polymer-Zusammensetzungen gelöst werden müssen. Der Einsatz klassischer Lösemittel wird aber zunehmend vermieden, weil diese flüchtig, entzündlich und vielfach toxisch sind, in der Anwendung zu VOC-Emissionen, Schwund und Gerüchen führen und oft Arbeitsschutzmassnahmen erfordern. Alternativ können Glykole oder Polyole als schwerflüchtige Lösemittel eingesetzt werden. Diese sind aber durch ihren Gehalt an Hydroxylgruppen sehr hydrophil und mit vielen Polymer-Zusammensetzungen nicht verträglich. Als schwerflüchtige Lösemittel können auch Weichmacher eingesetzt werden, beispielsweise Phthalate, beispielhaft genannt seien hierfür EP3336114A1 oder WO2017/108834A1, oder Adipate wie Diisodecylphthalat (DIDP) oder Di(2-ethylhexyl)adipat (DOA). Die meisten Weichmacher haben aber ein unbefriedigendes Lösevermögen für die Säuren, wodurch nur sehr verdünnte Lösungen möglich sind oder eine dauernde Erwärmung der Lösung erforderlich ist, um das Auskristallisieren der Säure zu verhindern. Ausserdem können Weichmacher weitere Nachteile für die Polymer-Zusammensetzung mit sich bringen, beispielsweise Fogging oder Migrationseffekte wie Ausschwitzen oder Staining.

Es besteht deshalb ein Bedarf nach einem Lösemittel, welches ein hohes Lösevermögen für aromatische Carbon- oder Sulfonsäuren aufweist, schwerflüchtig und untoxisch ist und sich insbesondere für den Einsatz in Polymer-Zusammensetzungen eignet.

### Darstellung der Erfindung

Aufgabe der vorliegenden Erfindung ist es daher, ein Lösemittel für aromatische Carbon- oder Sulfonsäuren zur Verfügung zu stellen, welches die Nachteile des Standes der Technik in Bezug auf Lösevermögen, Flüchtigkeit und Verträglichkeit mit Polymer-Zusammensetzungen überwindet.

Diese Aufgabe wird mit der Verwendung von mindestens einem Polyether mit blockierten Hydroxylgruppen wie in Anspruch 1 beschrieben gelöst. Der Polyether mit blockierten Hydroxylgruppen zeigt trotz seiner polymeren Struktur ein überraschend hohes Lösevermögen für aromatische Carbon- oder Sulfonsäuren und ist äusserst schwerflüchtig und untoxisch. Er ermöglicht hochkonzentrierte Säurelösungen, welche überraschend dünnflüssig und ohne Erwärmung über längere Zeit haltbar sind, ohne dass es zum Auskristallisieren oder Ausfallen der Säure kommt. Solche Säurelösungen lassen sich somit einfach herstellen, fördern, transportieren und lagern. Sie lassen sich ausgezeichnet in eine Polymer-Zusammensetzung, insbesondere eine Polyurethan-Zusammensetzung, einarbeiten, sind darin sehr gut verträglich, auch zusammen mit Isocyanatgruppen, und verursachen keine Migrationseffekte oder Fogging. Sie sind ganz besonders vorteilhaft in Fällen, wo die Säurelösung erst im Abfüllprozess der Zusammensetzung, beispielsweise beim Befüllen einer Kartusche oder eines Schlauchbeutels, zudosiert wird, was bei normalen Abfüllanlagen nur bei geringer absoluter Menge an Lösung möglich ist und dementsprechend eine hohe Säurekonzentration erfordert, um die Zugabe einer ausreichenden Menge Säure zu gewährleisten.

Besonders vorteilhaft wird die erfindungsgemässe Säurelösung in einkomponentigen feuchtigkeitshärtenden Polyurethan-Zusammensetzungen eingesetzt, welche Isocyanatgruppen und latente Härter wie insbesondere Aldimine oder Oxazolidine enthalten. Dabei wirkt die aromatische Carbon- oder Sulfonsäure als Katalysator für die Hydrolyse der latenten Härter. Solche Zusammensetzungen härten unter dem Einfluss von Feuchtigkeit blasenfrei und ohne Geruchsbildung aus, zeigen nach der Aushärtung kaum Migrations-bedingte Fehler wie Ausschwitzen oder Staining und eignen sich insbesondere als Klebstoff, Dichtstoff oder Beschichtung. Im Stand der Technik wird in solchen Zusammensetzungen üblicherweise Di(2-ethylhexyl)adipat (DOA) als Lösemittel für die aromatische Carbon- oder Sulfonsäure verwendet. Damit sind aber nur sehr verdünnte Lösungen möglich und DOA neigt zu Migrationseffekten.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist die Verwendung von mindestens einem Polyether mit blockierten Hydroxylgruppen als Lösemittel für mindestens eine aromatische Carbon- oder Sulfonsäure.

Als "Polyether" wird ein Molekül bzw. eine Gruppe von oligomeren und/oder polymeren Molekülen bezeichnet, welche mehrheitlich aus Alkylenoxy-Repetiereinheiten bestehen.

Als "blockierte Hydroxylgruppe" wird eine durch chemische Reaktion zu einer gegenüber Isocyanatgruppen nicht reaktiven Gruppe umgesetzte Hydroxylgruppe bezeichnet.

Als "Molekulargewicht" wird die molare Masse (in Gramm pro Mol) eines Moleküls oder eines Molekül-Rests bezeichnet. Als "mittleres Molekulargewicht" wird das Zahlenmittel des Molekulargewichts Mₙ einer polydispersen Mischung von oligomeren oder polymeren Molekülen oder Molekül-Resten bezeichnet. Es wird üblicherweise mittels Gelpermeationschromatographie (GPC) gegen Polystyrol als Standard bestimmt.

Als "aromatisch" wird eine Säure oder ein Isocyanat bezeichnet, deren Säure- oder Isocyanatgruppe direkt an ein aromatisches C-Atom gebunden ist.

Als "härtbare Zusammensetzung" wird eine Zusammensetzung enthaltend polymerisierbare Makromoleküle bezeichnet, die durch Vernetzungsreaktionen ihrer Reaktivgruppen aushärten bzw. einen Zustand erhöhter mechanischer Festigkeit erlangen kann.

Als "Weichmacher" werden schwerflüchtige, die Viskosität eines Polymers senkende Substanzen bezeichnet, welche im Polymer nicht chemisch eingebunden sind und auf dieses eine weichmachende Wirkung ausüben.

Mit "Poly" beginnende Substanznamen wie Polyamin, Polyol oder Polyisocyanat bezeichnen Substanzen, die formal zwei oder mehr der in ihrem Namen vorkommenden funktionellen Gruppen pro Molekül enthalten.

Als "lagerstabil" oder "lagerfähig" wird eine härtbare Zusammensetzung bezeichnet, die bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Als "einkomponentig" wird eine härtbare Zusammensetzung bezeichnet, bei welcher alle Bestandteile der Zusammensetzung vermischt im gleichen Gebinde gelagert werden und welche mit Feuchtigkeit aushärtet.

Als "zweikomponentig" wird eine härtbare Zusammensetzung bezeichnet, bei welcher die Bestandteile der Zusammensetzung in zwei verschiedenen Komponenten vorliegen, welche in voneinander getrennten Gebinden gelagert und erst kurz vor oder während der Applikation der Zusammensetzung miteinander vermischt werden.

Als "Raumtemperatur" wird eine Temperatur von 23°C bezeichnet.

Der Polyether mit blockierten Hydroxylgruppen ist im Wesentlichen frei von nicht blockierten Hydroxylgruppen. Dabei bedeutet "im Wesentlichen frei von", dass 95 %, bevorzugt 99 %, insbesondere 99.9%, am meisten bevorzugt 100 %, der vorhandenen Hydroxylgruppen blockiert sind.

Der Polyether mit blockierten Hydroxylgruppen ist bevorzugt frei von Reaktivgruppen, welche mit Feuchtigkeit oder üblichen Inhaltsstoffen von härtbaren Zusammensetzungen Vernetzungsreaktionen eingehen. Er ist also inbesondere frei von Isocyanatgruppen und Silangruppen.

Der Polyether mit blockierten Hydroxylgruppen ist insbesondere bei Raumtemperatur flüssig.

Bevorzugt weist der Polyether mit blockierten Hydroxylgruppen eine Viskosität bei 20°C im Bereich von 30 bis 5'000 mPa·s, mehr bevorzugt 40 bis 2'000 mPa·s, besonders bevorzugt 50 bis 1'000 mPas, insbesondere 50 bis 500 mPas, auf. Dabei wird die Viskosität bestimmt mit einem Kegel-Platten-Viskosimeter mit Kegeldurchmesser 25 mm, Kegelwinkel 1°, Kegelspitze-Platten-Abstand 0.05 mm bei einer Scherrate von 10 s⁻¹. Damit werden gut handhabbare Lösungen mit hoher Säurekonzentration erhalten.

Bevorzugt sind die blockierten Hydroxylgruppen ausgewählt aus der Gruppe bestehend aus Ester-, Acetoester-, Carbonat- und Urethangruppen.

Bevorzugt weisen diese Ester-, Acetoester-, Carbonat- oder Urethangruppen 1 bis 15 C-Atome auf.

Besonders bevorzugt sind Ester- oder Urethangruppen. Zu diesen Gruppen sind Hydroxylgruppen besonders einfach umsetzbar und sie sind besonders stabil und verträglich mit aromatischen Carbon- oder Sulfonsäuren.

Ganz besonders bevorzugt ist eine Estergruppe, insbesondere eine Estergruppe mit 1 bis 8 C-Atomen.

Am meisten bevorzugt ist eine Acetatgruppe. Ein Polyether mit blockierten Hydroxylgruppen in Form von Acetatgruppen ist besonders niedrigviskos, ganz besonders einfach zugänglich und besonders preisgünstig.

Weiterhin bevorzugt ist eine Urethangruppe, insbesondere eine Phenylurethangruppe oder eine p-Toluolsulfonylurethangruppe. Ein Polyether mit solchen blockierten Hydroxylgruppen weist eine handhabbare Viskosität auf und ist besonders einfach herstellbar.

Bevorzugt als Acetoestergruppe ist eine Acetoacetatgruppe.

Bevorzugt als Carbonatgruppe ist eine Methylcarbonatgruppe.

Diese sind niedrigviskos und aus preisgünstigen Ausgangsstoffen zugänglich.

Bevorzugt weist der Polyether mit blockierten Hydroxylgruppen als Repetiereinheiten 1,2-Ethylenoxy-, 1,2-Propylenoxy-, 1,3-Propylenoxy-, 1,2-Butylenoxy- oder 1,4-Butylenoxy-Gruppen, insbesondere 1,2-Propylenoxy-Gruppen, auf.

Bevorzugt bestehen 70 bis 100 Gewichts-%, insbesondere 80 bis 100 Gewichts-%, der Repetiereinheiten aus 1,2-Propylenoxy-Gruppen und 0 bis 30 Gewichts-%, insbesondere 0 bis 20 Gewichts-%, der Repetiereinheiten aus 1,2-Ethylenoxy-Gruppen.

Besonders bevorzugt bestehen die Repetiereinheiten zu 100 % aus 1,2-Propylenoxy-Gruppen.

Solche Polyether sind einfach verfügbar, hydrophob und somit besonders geeignet als Bestandteil von härtbaren Zusammensetzungen mit geringer Wasseraufnahme und guter Beständigkeit.

Bevorzugt weist der Polyether mit blockierten Hydroxylgruppen ein mittleres Molekulargewicht Mₙ im Bereich von 600 bis 10'000 g/mol, besonders bevorzugt 700 bis 5'000 g/mol, insbesondere 800 bis 2'500 g/mol, auf, bestimmt mittels Gelpermeationschromatographie (GPC) gegen Polystyrol als Standard mit Tetrahydrofuran als mobiler Phase, Brechungsindex-Detektor und Auswertung ab 200 g/mol.

Solche Polyether mit blockierten Hydroxylgruppen ermöglichen niedrigviskose und somit gut handhabbare Lösungen und verursachen in härtbaren Zusammensetzungen weder Emission noch Geruch.

Bevorzugt ist der Polyether mit blockierten Hydroxylgruppen abgeleitet von mindestens einem hydroxyfunktionellen Polyether ausgewählt aus der Gruppe bestehend aus
- Alkohol-, insbesondere n-Butanol-, gestarteten Polyoxypropylen-Monolen mit einer OH-Zahl im Bereich von 25 bis 90 mg KOH/g, bevorzugt 50 bis 80 mg KOH/g,
- Polyoxypropylen-Diolen mit einer OH-Zahl im Bereich von 12 bis 155 mg KOH/g, bevorzugt 22 bis 125 mg KOH/g, insbesondere 45 bis 125 mg KOH/g,
- Trimethylolpropan- oder insbesondere Glycerin-gestarteten, gegebenenfalls Ethylenoxid-terminierten, Polyoxypropylen-Triolen mit einer mittleren OH-Funktionalität im Bereich von 2.2 bis 3 und einer OH-Zahl im Bereich von 22 bis 230 mg KOH/g, bevorzugt 56 bis 165 mg KOH/g, und
- Zuckeralkohol-gestarteten Polyoxypropylenpolyolen mit einer mittleren OH-Funktionalität im Bereich von 3 bis 6, insbesondere mit Threit, Erythrit, Xylit, Mannit oder Sorbit als Startermolekül. Ein solcher Polyether mit blockierten Hydroxylgruppen ist kommerziell erhältlich als Sanflex^{®} SPX-80 (von Sanyo Chem. Ind.).

Davon bevorzugt sind Alkohol-, insbesondere n-Butanol-, gestartete Polyoxypropylen-Monole oder Polyoxypropylen-Diole.

Besonders bevorzugt sind Polyoxypropylen-Diole. Diese sind besonders preisgünstig.

Die bevorzugten Polyether mit blockierten Hydroxylgruppen sind aus gut verfügbaren Grundstoffen in einem einfachen Verfahren herstellbar, niedrigviskos und ermöglichen Säurelösungen mit hoher Konzentration bei guter Handhabbarkeit.

Der Polyether mit blockierten Hydroxylgruppen wird insbesondere erhalten durch Umsetzung von mindestens einem hydroxyfunktionellen Polyether mit mindestens einem geeigneten Blockierungsmittel für Hydroxylgruppen.

Für die Umsetzung wird das Blockierungsmittel mindestens stöchiometrisch in Bezug auf die Hydroxylgruppen eingesetzt, so dass die Hydroxylgruppen im Wesentlichen vollständig blockiert werden und der erhaltene Polyether somit im Wesentlichen frei ist von Hydroxylgruppen. Für die Blockierung werden für die jeweiligen Reaktivgruppen übliche Verfahren eingesetzt, gegebenenfalls unter Mitverwendung von Katalysatoren oder Lösemitteln. Falls bei der Blockierungsreaktion Abspalter entstehen, werden diese mit einer geeigneten Methode aus der Reaktionsmischung entfernt, insbesondere mittels Destillation.

Als Blockierungsmittel geeignet sind nucleophile Verbindungen, welche mit Hydroxylgruppen eine Additions- oder Substitutionsreaktion eingehen.

Geeignet sind insbesondere Carbonsäuren, Carbonsäurechloride, Carbonsäureester oder Carbonsäureanhydride, Diketen, 2,2,5-Trimethyl-4H-1,3-dioxin-4-on, Alkylacetoacetate, Dialkylcarbonate, Monoisocyanate, (Meth)acrylamide, Methylenmalonate oder Cyanacrylate.

Bevorzugt sind Carbonsäuren, Carbonsäurechloride, Carbonsäureester oder Carbonsäureanhydride, wobei blockierte Hydroxylgruppen in Form von Estergruppen entstehen. Davon bevorzugt sind Carbonsäureanhydride oder Carbonsäureester, insbesondere Essigsäureanhydrid.

Im Fall von Essigsäureanhydrid als Blockierungsmittel wird bei der Umsetzung Essigsäure freigesetzt, wobei blockierte Hydroxylgruppen in Form von Acetatgruppen entstehen.

Im Fall von Isopropenylacetat als Blockierungsmittel wird bei der Umsetzung Aceton freigesetzt, wobei ebenfalls blockierte Hydroxylgruppen in Form von Acetatgruppen entstehen.

Bevorzugt sind weiterhin Diketen, 2,2,5-Trimethyl-4H-1,3-dioxin-4-on oder sterisch gehinderte Alkylacetoacetate wie insbesondere tert.Butylacetoacetat, wobei blockierte Hydroxylgruppen in Form von Acetoestergruppen entstehen.

Bevorzugt sind weiterhin Dialkylcarbonate, insbesondere Dimethylcarbonat, wobei blockierte Hydroxylgruppen in Form von Carbonatgruppen, insbesondere Methylcarbonatgruppen, entstehen.

Bevorzugt sind weiterhin Monoisocyanate, wobei blockierte Hydroxylgruppen in Form von Urethangruppen entstehen. Bevorzugt sind Phenylisocyanat oder p-Toluolsulfonylisocyanat.

Als hydroxyfunktioneller Polyether geeignet sind insbesondere solche mit einer mittleren OH-Funktionalität im Bereich von 1 bis 6 und einem mittleren Molekulargewicht im Bereich von 500 bis 10'000 g/mol, besonders bevorzugt 600 bis 5'000 g/mol, insbesondere 700 bis 2'500 g/mol.

Bevorzugt sind Polyoxypropylen-Monole mit einer OH-Zahl im Bereich von 25 bis 90 mg KOH/g, bevorzugt 50 bis 80 mg KOH/g, insbesondere Alkohol-gestartete Polyoxypropylen-Monole, insbesondere gestartet von Methanol, Ethanol, Propanol, Isopropanol, n-Butanol, Isobutanol, tert.Butanol, Pentanol, Hexanol, 2-Ethylhexanol, Laurylalkohol, Myristylalkohol, Palmitylalkohol, Allylalkohol, Cyclohexanol, Benzylalkohol oder Phenol. Davon bevorzugt sind Alkylalkohol-gestartete Polyoxypropylenmonole, insbesondere gestartet von Methanol, Ethanol oder n-Butanol. Besonders bevorzugt sind n-Butanol-gestartete Polyoxypropylen-Monole mit einem mittleren Molekulargewicht Mₙ im Bereich von 650 bis 2'000 g/mol, insbesondere 700 bis 1'500 g/mol. n-Butanol-gestartete Polyoxypropylen-Monole sind kommerziell erhältlich, beispielsweise als Synalox^{®} 100-20B, Synalox^{®} 100-40B oder Synalox^{®} 100-85B (alle von DowDuPont Inc.).

Weiterhin bevorzugt sind Polyoxypropylen-Diole mit einer OH-Zahl im Bereich von 12 bis 155 mg KOH/g, bevorzugt 22 bis 125 mg KOH/g, insbesondere 45 bis 125 mg KOH/g.

Weiterhin bevorzugt sind Trimethylolpropan- oder insbesondere Glycerin-gestartete, gegebenenfalls Ethylenoxid-terminierte, Polyoxypropylen-Triole mit einer mittleren OH-Funktionalität im Bereich von 2.2 bis 3 und einer OH-Zahl im Bereich von 22 bis 230 mg KOH/g, bevorzugt 56 bis 165 mg KOH/g.

Weiterhin bevorzugt sind Zuckeralkohol-gestartete Polyoxypropylenpolyole mit einer mittleren OH-Funktionalität von mindestens 3, insbesondere im Bereich von 3 bis 6, insbesondere mit Threit, Erythrit, Xylit, Mannit oder Sorbit als Startermolekül.

Als aromatische Carbon- oder Sulfonsäure geeignet ist insbesondere Benzoesäure, Salicylsäure, 2-Nitrobenzoesäure, 2-Chlorobenzoesäure, p-Toluolsulfonsäure oder Mischungen aus zwei oder mehr der vorgenannten Säuren. Bevorzugt ist die aromatische Carbon- oder Sulfonsäure ausgewählt aus der Gruppe bestehend aus Benzoesäure, 2-Nitrobenzoesäure, Salicylsäure und p-Toluolsulfonsäure.

Besonders bevorzugt ist Salicylsäure.

Die bevorzugten aromatischen Carbon- oder Sulfonsäuren sind einfach verfügbar und ermöglichen eine besonders schnelle Hydrolyse von latenten Härtern mit Aldimino-, Ketimino-, Enamino- oder Oxazolidinogruppen. Sie sind bei Raumtemperatur fest und hochschmelzend und benötigen daher ein Lösemittel, um in härtbaren Zusammensetzungen einfach verwendbar zu sein.

Aus der beschriebenen Verwendung resultiert eine Säurelösung.

Ein weiterer Gegenstand der Erfindung ist somit die Säurelösung aus der beschriebenen Verwendung.

Eine solche Säurelösung ist insbesondere geeignet als Katalysator für die Hydrolyse von latenten Härtern mit Aldimino-, Ketimino-, Enamino- oder Oxazolidinogruppen, insbesondere in einer härtbaren Zusammensetzung enthaltend Isocyanatgruppen.

Insbesondere ist die Säurelösung bei Raumtemperatur flüssig und enthält im Wesentlichen keine Anteile an nicht gelöster aromatischer Carbon- oder Sulfonsäure.

Bevorzugt ist die Lösung bei 4°C flüssig und kann während 7 Tagen in einem verschlossenen Gebinde bei 4°C gelagert werden, ohne dass Anteile der aromatischen Carbon- oder Sulfonsäure auskristallisieren.

Bevorzugt enthält die Säurelösung 2.5 bis 25 Gewichts-% der aromatischen Carbon- oder Sulfonsäure und 50 bis 97.5 Gewichts-%, insbesondere 75 bis 97.5 Gewichts-%, Polyether mit blockierten Hydroxylgruppen.

Besonders bevorzugt enthält die Säurelösung 5 bis 20, insbesondere 7.5 bis 15, Gewichts-% der aromatischen Carbon- oder Sulfonsäure, und 80 bis 95, insbesondere 85 bis 92.5, Gewichts-% Polyether mit blockierten Hydroxylgruppen.

Bevorzugt weist die Säurelösung eine Viskosität bei 20°C im Bereich von 40 bis 8'000 mPa·s, mehr bevorzugt 50 bis 4'000 mPa·s, besonders bevorzugt 60 bis 2'000 mPas, insbesondere 70 bis 1'000 mPas, auf. Dabei wird die Viskosität bestimmt mit einem Kegel-Platten-Viskosimeter mit Kegeldurchmesser 25 mm, Kegelwinkel 1°, Kegelspitze-Platten-Abstand 0.05 mm bei einer Scherrate von 10 s⁻¹.

Bevorzugt wird die Säurelösung hergestellt, indem entweder der Polyether mit blockierten Hydroxylgruppen bei einer Temperatur im Bereich von 15 bis 100°C, insbesondere 20 bis 90°C, vorgelegt und die aromatische Carbon- oder Sulfonsäure unter Rühren zudosiert wird, oder indem ein Gemisch enthaltend den Polyether mit blockierten Hydroxylgruppen und die aromatische Carbon- oder Sulfonsäure bei einer Temperatur im Bereich von 15 bis 100°C, insbesondere 20 bis 90°C, in Lösung gebracht wird. In beiden Fällen wird gerührt, bis die aromatische Carbon- oder Sulfonsäure vollständig gelöst ist. Die Säurelösung wird bevorzugt bis zur weiteren Verwendung in einem geschlossenen Gebinde aufbewahrt.

Falls gewünscht, kann die Säurelösung zusätzlich zum Polyether mit blockierten Hydroxylgruppen und zur aromatischen Carbon- oder Sulfonsäure weitere Substanzen enthalten, insbesondere Weichmacher, weitere Säuren, Säureester, Säureanhydride oder Silylester von Säuren, oder Katalysatoren, insbesondere mindestens einen Katalysator für die Beschleunigung der Reaktion von Isocyanatgruppen, insbesondere Organozinn(IV)-Verbindungen, Komplexverbindungen von Bismut(III) oder Zirkonium(IV) oder tertiäre Aminogruppen enthaltende Verbindungen wie insbesondere 2,2'-Dimorpholinodiethylether (DMDEE). Bevorzugt ist die Lösung frei von weiteren Substanzen.

Bevorzugt wird die Säurelösung als Katalysator für die Vernetzung einer härtbaren Zusammensetzung verwendet.

Die härtbare Zusammensetzung weist bevorzugt Isocyanatgruppen und/oder Silangruppen, insbesondere Isocyanatgruppen, auf.

Bevorzugt wird die Säurelösung in einer Isocyanatgruppen-haltigen härtbaren Zusammensetzung zur Beschleunigung der Hydrolyse von mindestens einem latenten Härter verwendet. Der Polyether mit blockierten Hydroxylgruppen ist besonders gut verträglich in einer solchen Zusammensetzung und ist insbesondere auch zusammen mit Isocyanatgruppen sehr lagerstabil.

Ein weiterer Gegenstand der Erfindung ist somit eine härtbare Zusammensetzung enthaltend die beschriebene Säurelösung.

Die in der Zusammensetzung enthaltene Säurelösung kann dabei separat hergestellt und in die Zusammensetzung eingemischt werden, oder sie kann zu einem beliebigen Zeitpunkt direkt in der Zusammensetzung hergestellt werden. Bevorzugt ist die in der Zusammensetzung enthaltene Säurelösung separat hergestellt.

Bevorzugt enthält die härtbare Zusammensetzung 0.01 bis 0.5 Gewichts-%, insbesondere 0.02 bis 0.25 Gewichts-%, der gelösten aromatischen Carbon- oder Sulfonsäure.

Bevorzugt umfasst die härtbare Zusammensetzung
- mindestens ein Polyisocyanat oder Isocyanatgruppen-haltiges Polymer,
- mindestens einen latenten Härter, welcher mindestens eine Aldimino-, Ketimino-, Enamino- oder Oxazolidinogruppe aufweist,
- mindestens einen Polyether mit blockierten Hydroxylgruppen, wie vorgängig beschrieben, und
- mindestens eine aromatische Carbon- oder Sulfonsäure.

Als Polyisocyanat bevorzugt sind aliphatische, cycloaliphatische oder aromatische Diisocyanate, insbesondere 1,6-Hexamethylendiisocyanat (HDI), 1-Isocyanato-3,3,5-trimethyl-5-isocyanatomethylcyclohexan (Isophorondiisocyanat oder IPDI), Perhydro-2,4'- und/oder -4,4'-diphenylmethandiisocyanat (H₁₂MDI), 4,4'-Diphenylmethandiisocyanat, gegebenenfalls mit Anteilen von 2,4'- und/oder 2,2'-Diphenylmethandiisocyanat (MDI), 2,4-Toluylendiisocyanat oder Gemische davon mit 2,6-Toluylendiisocyanat (TDI), Gemische aus MDI und MDI-Homologen (polymeres MDI oder PMDI) oder oligomere Isocyanate.

Geeignete oligomere Isocyanate sind insbesondere HDI-Biurete wie Desmodur^{®} N 100 oder N 3200 (von Covestro AG), Tolonate^{®} HDB oder HDB-LV (von Vencorex Holding SAS) oder Duranate^{®} 24A-100 (von Asahi Kasei Corp.); HDI-Isocyanurate wie Desmodur^{®} N 3300, N 3600 oder N 3790 BA (alle von Covestro AG), Tolonate^{®} HDT, HDT-LV oder HDT-LV2 (von Vencorex Holding SAS), Duranate^{®} TPA-100 oder THA-100 (von Asahi Kasei Corp.) oder Coronate^{®} HX (vonTosoh Corp.); HDI-Uretdione wie Desmodur^{®} N 3400 (von Covestro AG); HDI-Iminooxadiazindione wie Desmodur^{®} XP 2410 (von Covestro AG); HDI-Allophanate wie Desmodur^{®} VP LS 2102 (von Covestro AG); IPDI-Isocyanurate wie beispielsweise in Lösung als Desmodur^{®} Z 4470 (von Covestro AG) oder in fester Form als Vestanat^{®} T1890/ 100 (von Evonik Industries AG); TDI-Oligomere wie Desmodur^{®} IL (von Covestro AG); oder gemischte Isocyanurate auf Basis TDI/HDI wie Desmodur^{®} HL (von Covestro AG).

Als Polyisocyanat besonders bevorzugt ist HDI, IPDI, TDI, MDI oder eine bei Raumtemperatur flüssige Form von MDI.

Eine bei Raumtemperatur flüssige Form von MDI stellt entweder durch partielle chemische Modifizierung - insbesondere Carbodiimidisierung bzw. Uretoniminbildung oder Adduktbildung mit Polyolen - verflüssigtes 4,4'-MDI dar, oder es ist ein durch Abmischen gezielt herbeigeführtes oder durch den Herstellungsprozess bedingtes Gemisch von 4,4'-MDI mit anderen MDI-Isomeren (2,4'-MDI und/oder 2,2'-MDI), und/oder MDI-Oligomeren und/oder MDI-Homologen (polymeres MDI oder PMDI).

Als Polyisocyanat weiterhin besonders bevorzugt ist ein IPDI-Isocyanurat oder ein TDI-Oligomer oder ein gemischtes Isocyanurat auf Basis TDI/HDI oder ein HDI-Oligomer.

Ein geeignetes Isocyanatgruppen-haltiges Polymer wird insbesondere erhalten aus der Umsetzung von mindestens einem Polyol mit einer überstöchiometrischen Menge von mindestens einem Diisocyanat, bevorzugt MDI, TDI, IPDI oder HDI. Die Umsetzung wird bevorzugt unter Feuchtigkeitsausschluss bei einer Temperatur im Bereich von 20 bis 160°C, insbesondere 40 bis 140°C, durchgeführt, gegebenenfalls in Anwesenheit geeigneter Katalysatoren. Gegebenenfalls wird das Polymer unter Mitverwendung von Weichmachern oder Lösemitteln hergestellt, wobei die verwendeten Weichmacher oder Lösemittel keine gegenüber Isocyanaten reaktive Gruppen enthalten.

Für die Verwendung in einer zweikomponentigen Zusammensetzung wird der Überschuss an Diisocyanat bevorzugt so gewählt, dass im Isocyanatgruppen-haltigen Polymer nach der Umsetzung aller Hydroxylgruppen ein Gehalt an Isocyanatgruppen im Bereich von 1 bis 30 Gewichts-%, bevorzugt 1.5 bis 25 Gewichts-%, besonders bevorzugt 2 bis 20 Gewichts-%, bezogen auf das gesamte Polymer verbleibt.

Ein solches Isocyanatgruppen-haltiges Polymer weist bevorzugt ein mittleres Molekulargewicht Mₙ im Bereich von 350 bis 6'000 g/mol auf.

Für die Verwendung in einer einkomponentigen Zusammensetzung liegt das NCO/OH-Verhältnis bevorzugt im Bereich von 1.3/1 bis 10/1. Das nach der Umsetzung der OH-Gruppen im Reaktionsgemisch verbleibende monomere Diisocyanat kann entfernt werden, insbesondere mittels Destillation. Das erhaltene Polymer hat bevorzugt einen Gehalt an Isocyanatgruppen im Bereich von 0.5 bis 10 Gewichts-%, insbesondere 1 bis 5 Gewichts-%, besonders bevorzugt 1 bis 3 Gewichts-% und hat bevorzugt ein mittleres Molekulargewicht Mₙ im Bereich von 1'500 bis 20'000 g/mol, insbesondere 2'000 bis 15'000 g/mol. Für den Fall, dass überschüssiges monomeres Diisocyanat mittels Destillation entfernt wird, liegt das NCO/OH-Verhältnis bei der Umsetzung bevorzugt im Bereich von 4/1 bis 7/1, und das erhaltene Isocyanatgruppen-haltige Polymer enthält nach der Destillation bevorzugt höchstens 0.5 Gewichts-%, besonders bevorzugt höchstens 0.3 Gewichts-%, monomeres Diisocyanat. Dabei wird monomeres Diisocyanat insbesondere mittels Kurzwegdestillation im Vakuum entfernt.

Für den Fall, dass kein überschüssiges monomeres Diisocyanat aus dem Polymer entfernt wird, liegt das NCO/OH-Verhältnis bei der Umsetzung bevorzugt im Bereich von 1.3/1 bis 2.5/1.

Geeignete Polyole sind handelsübliche Polyole oder Mischungen davon, insbesondere
- Polyetherpolyole, insbesondere Polyoxyalkylendiole und/oder Polyoxyalkylentriole, insbesondere Polymerisationsprodukte von Ethylenoxid oder 1,2-Propylenoxid oder 1,2- oder 2,3-Butylenoxid oder Oxetan oder Tetrahydrofuran oder Mischungen davon, wobei diese mit Hilfe eines Startermoleküls mit zwei oder drei aktiven Wasserstoffatomen polymerisiert sein können, insbesondere einem Startermolekül wie Wasser, Ammoniak oder einer Verbindung mit mehreren OH- oder NH-Gruppen wie beispielsweise 1,2-Ethandiol, 1,2- oder 1,3-Propandiol, Neopentylglykol, Diethylenglykol, Triethylenglykol, die isomeren Dipropylenglykole oder Tripropylenglykole, die isomeren Butandiole, Pentandiole, Hexandiole, Heptandiole, Octandiole, Nonandiole, Decandiole, Undecandiole, 1,3- oder 1,4-Cyclohexandimethanol, Bisphenol A, hydriertes Bisphenol A, 1,1,1-Trimethylolethan, 1,1,1-Trimethylolpropan, Glycerin oder Anilin, oder Mischungen der vorgenannten Verbindungen. Ebenfalls geeignet sind Polyetherpolyole mit darin dispergierten Polymerpartikeln, insbesondere solche mit Styrol-Acrylnitril-Partikeln (SAN) oder Polyharnstoff- bzw. Polyhydrazodicarbonamid-Partikeln (PHD).
   Bevorzugte Polyetherpolyole sind Polyoxypropylendiole oder Polyoxypropylen-triole, oder sogenannte Ethylenoxid-terminierte (EO-capped bzw. EO-tipped) Polyoxypropylendiole oder -triole. Letztere sind Polyoxyethylen-polyoxypropylen-Mischpolyole, die insbesondere dadurch erhalten werden, dass Polyoxypropylendiole oder -triole nach Abschluss der Polypropoxylierungsreaktion mit Ethylenoxid weiter alkoxyliert werden und dadurch primäre Hydroxylgruppen aufweisen.
   Bevorzugte Polyetherpolyole weisen einen Ungesättigtheitsgrad von weniger als 0.02 mEq/g, insbesondere weniger als 0.01 mEq/g auf.
- Polyesterpolyole, auch Oligoesterole genannt, hergestellt nach bekannten Verfahren, insbesondere der Polykondensation von Hydroxycarbonsäuren bzw. Lactonen oder der Polykondensation von aliphatischen und/oder aromatischen Polycarbonsäuren mit zwei- oder mehrwertigen Alkoholen. Bevorzugt sind Polyesterdiole aus der Umsetzung von zweiwertigen Alkoholen wie insbesondere 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole, mit organischen Dicarbonsäuren oder deren Anhydride oder Ester, wie insbesondere Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure, 1,2-Cyclohexandicarbonsäure, 1,3-Cyclohexandicarbonsäure oder 1,4-Cyclohexandicarbonsäure oder Mischungen der vorgenannten Säuren, oder Polyesterpolyole aus Lactonen wie insbesondere ε-Caprolacton. Besonders bevorzugt sind Polyesterpolyole aus Adipinsäure oder Sebacinsäure oder Dodecandicarbonsäure und Hexandiol oder Neopentylglykol.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei OH-Gruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- oder Polymethacrylatpolyole.
- Polyhydroxyfunktionelle Fette oder Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie insbesondere polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen oder Isopren, insbesondere polyhydroxyfunktionelle Acrylonitril/ Butadien-Copolymere, wie sie insbesondere aus Epoxiden oder Aminoalkoholen und carboxylterminierten Acrylonitril/Butadien-Copolymeren (beispielsweise kommerziell erhältlich unter dem Namen Hypro^{®} CTBN oder CTBNX oder ETBN von Emerald Performance Materials) hergestellt werden können; oder hydrierte polyhydroxyfunktionelle Polymere oder Copolymere von Dienen.

Geeignet sind insbesondere auch Mischungen von Polyolen.

Bevorzugt sind Polyetherpolyole, Polyesterpolyole, Polycarbonatpolyole, Poly-(meth)acrylatpolyole oder Polybutadienpolyole.

Besonders bevorzugt sind Polyetherpolyole, Polyesterpolyole, insbesondere aliphatische Polyesterpolyole, oder Polycarbonatpolyole, insbesondere aliphatische Polycarbonatpolyole.

Insbesondere bevorzugt sind Polyetherpolyole, insbesondere Polyoxyalkylenpolyole.

Am meisten bevorzugt sind Polyoxypropylendi- oder -triole oder Ethylenoxid-terminierte Polyoxypropylendi- oder -triole.

Bevorzugt sind Polyole mit einem mittleren Molekulargewicht Mₙ im Bereich von 400 bis 20'000 g/mol, bevorzugt von 1'000 bis 15'000 g/mol.

Bevorzugt sind Polyole mit einer mittleren OH-Funktionalität im Bereich von 1.6 bis 3.

Bevorzugt sind bei Raumtemperatur flüssige Polyole.

Bei der Herstellung eines Isocyanatgruppen-haltigen Polymers können auch Anteile von zwei- oder mehrfunktionellen Alkoholen mitverwendet werden, insbesondere 1,2-Ethandiol, 1,2-Propandiol, 1,3-Propandiol, 2-Methyl-1,3-propandiol, 1,2-Butandiol, 1,3-Butandiol, 1,4-Butandiol, 1,3-Pentandiol, 1,5-Pentandiol, 3-Methyl-1,5-pentandiol, Neopentylglykol, Dibromneopentylglykol, 1,2-Hexandiol, 1,6-Hexandiol, 1,7-Heptandiol, 1,2-Octandiol, 1,8-Octandiol, 2-Ethyl-1,3-hexandiol, Diethylenglykol, Triethylenglykol, Dipropylenglykol, Tripropylenglykol, 1,3- oder 1,4-Cyclohexandimethanol, ethoxyliertes Bisphenol-A, propoxyliertes Bisphenol-A, Cyclohexandiol, hydriertes Bisphenol-A, Dimerfettsäurealkohole, 1,1,1-Trimethylolethan, 1,1,1-Trimethylolpropan, Glycerin, Pentaerythritol, Zuckeralkohole wie insbesondere Xylit, Sorbit oder Mannit oder Zucker wie insbesondere Saccharose oder alkoxylierte Derivate der genannten Alkohole oder Mischungen der genannten Alkohole.

Bevorzugt sind insbesondere auch Kombinationen aus einem oder mehreren Polyisocyanaten und einem oder mehreren Isocyanatgruppen-haltigen Polymeren.

Für die Verwendung in einem Heissschmelzklebstoff ist ein bei Raumtemperatur festes Isocyanatgruppen-haltiges Polymer bevorzugt, welches ausgehend von mindestens einem bei Raumtemperatur festen Polyol und einem Diisocyanat, insbesondere MDI, hergestellt ist. Ein geeignetes bei Raumtemperatur festes Polyol ist bei Raumtemperatur kristallin, teilkristallin oder amorph. Bevorzugt liegt sein Schmelzpunkt im Bereich von 50 bis 180°C, insbesondere 70 bis 150°C. Bevorzugt sind Polyesterpolyole, insbesondere solche abgeleitet von Hexandiol und Adipinsäure oder Dodecandicarbonsäure, oder Acrylatpolyole.

Bevorzugt enthält der latente Härter mindestens eine Gruppe ausgewählt aus Aldiminogruppen, Ketiminogruppen, Enaminogruppen und Oxazolidinogruppen und mindestens eine weitere Gruppe ausgewählt aus Hydroxylgruppen, primären und sekundären Aminogruppen, Aldiminogruppen, Ketiminogruppen, Enaminogruppen und Oxazolidinogruppen.

Dabei sind latente Härter, welche Hydroxylgruppen oder primäre oder sekundäre Aminogruppen enthalten, besonders geeignet für zwei- oder mehrkomponentige Zusammensetzungen. Für den Fall, dass sie in einkomponentigen Zusammensetzungen eingesetzt werden, reagieren sie beim Vermischen mit Isocyanaten und bilden dabei Umsetzungsprodukte, welche Aldiminogruppen, Ketiminogruppen, Enaminogruppen oder Oxazolidinogruppen aufweisen. Dabei kann der Gehalt an monomeren Diisocyanaten in Isocyanatgruppen-haltigen Polymeren gesenkt werden, was aus toxikologischen Gründen vorteilhaft ist.

Besonders bevorzugt enthält der latente Härter zwei oder drei Reaktivgruppen ausgewählt aus Aldiminogruppen und Oxazolidinogruppen. Ein solcher latenter Härter ist besonders geeignet für einkomponentige Zusammensetzungen. Bevorzugt sind Di- oder Trialdimine oder Bisoxazolidine.

Geeignete Bisoxazolidine sind insbesondere Verbindungen der Formeln 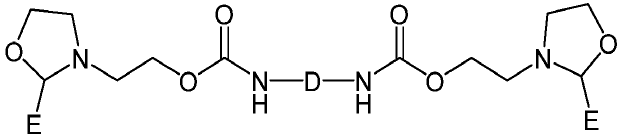 oder 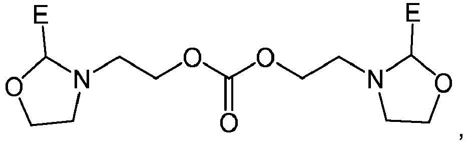 wobei
D für einen zweiwertigen Kohlenwasserstoff-Rest mit 6 bis 15 C-Atomen, insbesondere 1,6-Hexamethylen oder (1,5,5-Trimethylcyclohexan-1-yl)methan-1,3 oder 4(2)-Methyl-1,3-phenylen, steht, und
E für einen organischen Rest mit 3 bis 30 C-Atomen, insbesondere für 2-Propyl oder 3-Heptyl oder Phenyl oder Alkyl-substituiertes Phenyl, insbesondere 4-Decylphenyl, 4-Undecylphenyl, 4-Dodecylphenyl, 4-Tridecylphenyl oder 4-Tetradecylphenyl, in denen die 4-Alkyl-Reste mehrheitlich verzweigt vorliegen.

Bevorzugt ist der latente Härter ein Aldimin der Formel , 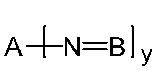 wobei y für 2 oder 3, A für einen organischen Rest mit 2 bis 23 C-Atomen und B für einen organischen Rest mit 6 bis 30 C-Atomen stehen.

Bevorzugt steht A für einen gegebenenfalls cyclische Anteile aufweisenden Alkylen-Rest oder einen zwei- oder dreiwertigen Polyoxyalkylen-Rest mit 5 bis 15 C-Atomen, insbesondere für 1,6-Hexylen, (1,5,5-Trimethylcyclohexan-1-yl)methan-1,3 oder α,ω-Polyoxypropylen mit einem mittleren Molekulargewicht Mₙ im Bereich von 170 bis 300 g/mol oder Trimethylolpropan-gestartetes Tris(ω-polyoxypropylen) mit einem mittleren Molekulargewicht Mₙ im Bereich von 330 bis 500 g/mol. Bevorzugt steht B für einen organischen Rest mit 7 bis 22 C-Atomen, insbesondere für 2,2-Dimethyl-3-acetoxypropyliden, 2,2-Dimethyl-3-lauroyloxypropyliden, 2,2-Dimethyl-3-(N-morpholino)propyliden, Benzyliden oder Alkyl-substituiertes Benzyliden, insbesondere 4-Decylbenzyliden, 4-Undecylbenzyliden, 4-Dodecylbenzyliden, 4-Tridecylbenzyliden oder 4-Tetradecylbenzyliden, in denen die 4-Alkyl-Reste mehrheitlich verzweigt vorliegen.

Besonders bevorzugt steht B für einen Rest mit mindestens 15 C-Atomen, insbesondere für 2,2-Dimethyl-3-lauroyloxypropyliden oder Alkyl-substituiertes Benzyliden. Ein solches Aldimin ist geruchsfrei.

Ein Aldimin der Formel 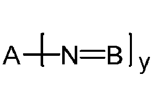 wird insbesondere erhalten durch Umsetzung eines Amins der Formel A-(NH₂)_{y} mit einem Aldehyd der Formel O=B unter Entfernung von Kondensationswasser.

Als Amin A-(NH₂)_{y} bevorzugt sind aliphatische oder cycloaliphatische primäre Di- oder Triamine, insbesondere 1,6-Hexamethylendiamin, Isophorondiamin, α,ω-Polyoxypropylendiamine mit einem mittleren Molekulargewicht Mₙ im Bereich von 200 bis 350 g/mol, insbesondere Jeffamine^{®} D-230 (von Huntsman Corp.), oder Trimethylolpropan-gestartetes Tris(ω-polyoxypropylenamin), insbesondere Jeffamine^{®} T-403 (von Huntsman Corp.).

Als Aldehyd O=B bevorzugt sind Aldolester von Carbonsäuren, insbesondere 2,2-Dimethyl-3-acetoxypropanal,-2,2-Dimethyl-3-lauroxyloxypropanal, 2,2-Dimethyl-3-(N-morpholino)propanal, Benzaldehyd oder mit Alkyl-Resten substituierte Benzaldehyde, insbesondere 4-Decylbenzaldehyd, 4-Undecylbenzaldehyd, 4-Dodecylbenzaldehyd, 4-Tridecylbenzaldehyd oder 4-Tetradecylbenzaldehyd, in denen die 4-Alkyl-Reste mehrheitlich verzweigt vorliegen, sowie Gemische dieser mit Alkyl-Resten substituierten Benzaldehyde.

Bei Kontakt mit Feuchtigkeit werden aus dem latenten Härter Aminogruppen und gegebenenfalls Hydroxylgruppen freigesetzt, welche mit Isocyanaten reagieren und als Vernetzer wirken. Dabei wird ein Aldehyd oder Keton freigesetzt.

Im Fall der bevorzugten Aldehyde der Formel O=B, bei welchen B für einen langkettigen Rest, insbesondere für einen Rest mit 15 oder mehr C-Atomen steht, verursacht dieser keine Geruchsprobleme und verbleibt nach der Aushärtung in der Zusammensetzung, wo er gut verträglich ist und als Weichmacher wirkt. Gegenüber der direkten Reaktion von Wasser mit Isocyanaten weist die Vernetzung über latente Härter den Vorteil auf, dass dabei kein CO₂ abgespalten wird, was die Tendenz zur Bildung von Blasen bei der Aushärtung stark reduziert.

Bevorzugt enthält die Zusammensetzung eine solche Menge an latenten Härtern, dass das Verhältnis zwischen der Anzahl der daraus freisetzbaren Reaktivgruppen und der Anzahl Isocyanatgruppen im Bereich von 0.1 bis 1.5, bevorzugt 0.2 bis 1.1, insbesondere 0.3 bis 1.0, liegt.

Bevorzugt enthält die härtbare Zusammensetzung zusätzlich einen oder mehrere weitere Bestandteile, insbesondere ausgewählt aus Weichmachern, Füllstoffen und Katalysatoren für die Reaktion von Isocyanatgruppen.

Geeignete Weichmacher sind insbesondere Carbonsäureester wie Phthalate, insbesondere Diisononylphthalat (DINP), Diisodecylphthalat (DIDP) oder Di(2-propylheptyl)phthalat (DPHP), hydrierte Phthalate bzw. 1,2-Cyclohexandicarbonsäureester, insbesondere hydriertes Diisononylphthalat bzw. Diisononyl-1,2-cyclohexandicarboxylat (DINCH), Terephthalate, insbesondere Bis(2-ethylhexyl)terephthalat (DOTP) oder Diisononylterephthalat (DINT), hydrierte Terephthalate bzw. 1,4-Cyclohexandicarbonsäureester, insbesondere hydriertes Bis(2-ethylhexyl)terephthalat bzw. Bis(2-ethylhexyl)-1,4-cyclohexandicarboxylat oder hydriertes Diisononylterephthalat bzw. Diisononyl-1,4-cyclohexandicarboxylat, Isophthalate, Trimellitate, Adipate, insbesondere Dioctyladipat, Azelate, Sebacate, Benzoate, Glykolether, Glykolester, Weichmacher mit Polyetherstruktur wie insbesondere die beschriebenen Polyether mit blockierten Hydroxylgruppen, organische Phosphor- oder Sulfonsäureester, Polybutene, Polyisobutene oder von natürlichen Fetten oder Ölen abgeleitete Weichmacher, insbesondere epoxidiertes Soja- oder Leinöl.

Bevorzugte Weichmacher sind Diisononylphthalat, Diisodecylphthalat oder die beschriebenen Polyether mit blockierten Hydroxylgruppen.

Geeignete Füllstoffe sind insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, Zemente, Gipse, Flugaschen, industriell hergestellte Russe, Graphit, Metall-Pulver, beispielsweise von Aluminium, Kupfer, Eisen, Silber oder Stahl, PVC-Pulver oder Hohlkugeln.

Bevorzugt sind Calciumcarbonate, welche gegebenenfalls mit Fettsäuren, insbesondere Stearaten, beschichtet sind, calcinierte Kaoline oder industriell hergestellte Russe.

Geeignete Katalysatoren für die Beschleunigung der Reaktion von Isocyanatgruppen sind insbesondere Organozinn(IV)-Verbindungen wie insbesondere Dibutylzinndiacetat, Dibutylzinndilaurat, Dibutylzinndichlorid, Dibutylzinndiacetylacetonat, Dimethylzinndilaurat, Dioctylzinndiacetat, Dioctylzinndilaurat oder Dioctylzinndiacetylacetonat, Komplexverbindungen von Bismut(III) oder Zirkonium(IV), insbesondere mit Liganden ausgewählt aus Alkoholaten, Carboxylaten, 1,3-Diketonaten, Oxinat, 1,3-Ketoesteraten und 1,3-Ketoamidaten, oder tertiäre Aminogruppen enthaltende Verbindungen wie insbesondere 2,2'-Dimorpholinodiethylether (DMDEE).

Die härtbare Zusammensetzung kann weitere Zusätze enthalten, insbesondere
- anorganische oder organische Pigmente, insbesondere Titandioxid, Chromoxide oder Eisenoxide;
- Fasern, insbesondere Glasfasern, Kohlefasern, Metallfasern, Keramikfasern, Kunststofffasern wie Polyamidfasern oder Polyethylenfasern, oder Naturfasern wie Wolle, Cellulose, Hanf oder Sisal;
- Nanofüllstoffe wie Graphen oder Carbon Nanotubes;
- Farbstoffe;
- Trocknungsmittel, insbesondere Molekularsiebpulver, Calciumoxid, hochreaktive Isocyanate wie p-Tosylisocyanat, Mono-Oxazolidine wie Incozol^{®} 2 (von Incorez) oder Orthoameisensäureester;
- Haftvermittler, insbesondere Organoalkoxysilane, insbesondere Epoxysilane wie insbesondere 3-Glycidoxypropyltrimethoxysilan oder 3-Glycidoxypropyltriethoxysilan, (Meth)acrylosilane, Anhydridosilane, Carbamatosilane, Alkylsilane oder Iminosilane, oder oligomere Formen dieser Silane, oder Titanate;
- weitere Katalysatoren, welche die Reaktion der Isocyanatgruppen beschleunigen, insbesondere Salze, Seifen oder Komplexe von Zinn(II), Zink, Eisen, Aluminium, Molybdän, Dioxomolybdän, Titan oder Kalium, insbesondere Zinn(II)-2-ethylhexanoat, Zinn(II)-neodecanoat, Zink(II)-acetat, Zink(II)-2-ethyl-hexanoat, Zink(II)-laurat, Zink(II)-acetylacetonat, Aluminiumlactat, Aluminiumoleat, Diisopropoxytitan-bis-(ethylacetoacetat) oder Kaliumacetat; tertiäre Aminogruppen enthaltende Verbindungen, insbesondere N-Ethyldiisopropylamin, N,N,N',N'-Tetramethylalkylendiamine, Pentamethylalkylentriamine und höhere Homologe davon, Bis-(N,N-diethylaminoethyl)adipat, Tris(3-dimethylaminopropyl)amin, 1,4-Diazabicyclo[2.2.2]octan (DABCO), 1,8-Diazabicyclo-[5.4.0]undec-7-en (DBU), 1,5-Diazabicyclo[4.3.0]non-5-en (DBN), N-Alkylmorpholine, N,N'-Dimethylpiperazin; stickstoffaromatische Verbindungen wie 4-Dimethylaminopyridin, N-Methylimidazol, N-Vinylimidazol oder 1,2-Dimethylimidazol; organische Ammoniumverbindungen wie Benzyltrimethylammoniumhydroxid oder alkoxylierte tertiäre Amine; sogenannte "delayed action"-Katalysatoren, welche Modifizierungen bekannter Metall- oder Aminkatalysatoren darstellen;
- Rheologie-Modifizierer, insbesondere Verdickungsmittel, insbesondere Schichtsilikate wie Bentonite, Derivate von Rizinusöl, hydriertes Rizinusöl, Polyamide, Polyamidwachse, Polyurethane, Harnstoffverbindungen, pyrogene Kieselsäuren, Celluloseether oder hydrophob modifizierte Polyoxyethylene;
- Lösemittel, insbesondere Aceton, Methylacetat, tert.Butylacetat, 1-Methoxy-2-propylacetat, Ethyl-3-ethoxypropionat, Diisopropylether, Diethylenglykoldiethylether, Ethylenglykoldiethylether, Ethylenglykolmonobutylether, Ethylenglykolmono-2-ethylhexylether, Acetale wie Propylal, Butylal, 2-Ethylhexylal, Dioxolan, Glycerolformal oder 2,5,7,10-Tetraoxaundecan (TOU), Toluol, Xylol, Heptan, Octan, Naphtha, White Spirit, Petrolether oder Benzin, insbesondere Solvesso^{™}-Typen (von ExxonMobil Chemical Co.), sowie Propylencarbonat, Dimethylcarbonat, Butyrolacton, N-Methylpyrrolidon, N-Ethylpyrrolidon, p-Chlorobenzotrifluorid oder Benzotrifluorid;
- natürliche Harze, Fette oder Öle wie Kolophonium, Schellack, Leinöl, Rizinusöl oder Sojaöl;
- nicht-reaktive Polymere, insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO);
- flammhemmende Substanzen, insbesondere die bereits genannten Füllstoffe Aluminiumhydroxid oder Magnesiumhydroxid, sowie insbesondere organische Phosphorsäureester wie insbesondere Triethylphosphat, Trikresylphosphat, Triphenylphosphat, Diphenylkresylphosphat, Isodecyldiphenylphosphat, Tris-(1,3-dichlor-2-propyl)phosphat, Tris(2-chlorethyl)phosphat, Tris(2-ethylhexyl)-phosphat, Tris(chlorisopropyl)phosphat, Tris(chlorpropyl)phosphat, isopropyliertes Triphenylphosphat, Mono-, Bis- oder Tris(isopropylphenyl)phosphate unterschiedlichen Isopropylierungsgrades, Resorcinol-bis(diphenylphosphat), Bisphenol-A-bis(diphenylphosphat) oder Ammoniumpolyphosphate;
- Additive, insbesondere Netzmittel, Verlaufmittel, Entschäumer, Entlüfter, Stabilisatoren gegen Oxidation, Wärme, Licht oder UV-Strahlung oder Biozide; oder weitere üblicherweise in härtbaren Zusammensetzungen eingesetzte Substanzen.

Es kann sinnvoll sein, gewisse Substanzen vor dem Einmischen in die Zusammensetzung chemisch oder physikalisch zu trocknen.

Bevorzugt enthält die härtbare Zusammensetzung
- 10 bis 70 Gewichts-%, insbesondere 20 bis 50 Gewichts-%, Isocyanatgruppen-haltige Polymere,
- 0.1 bis 20 Gewichts-%, insbesondere 1 bis 15 Gewichts-%, latente Härter,
- 20 bis 60 Gewichts-% Füllstoffe,
- 5 bis 40 Gewichts-% Weichmacher, und
- 0.01 bis 0.5 Gewichts-%, insbesondere 0.02 bis 0.25 Gewichts-%, im Polyether mit blockierten Hydroxylgruppen gelöste aromatische Carbon- oder Sulfonsäure.

Falls gewünscht kann der Polyether mit blockierten Hydroxylgruppen dabei zumindest teilweise auch als Weichmacher in der härtbaren Zusammensetzung vorhanden sein.

Die härtbare Zusammensetzung wird insbesondere unter Ausschluss von Feuchtigkeit hergestellt und bei Umgebungstemperatur in feuchtigkeitsdichten Gebinden aufbewahrt. Ein geeignetes feuchtigkeitsdichtes Gebinde besteht insbesondere aus einem gegebenenfalls beschichteten Metall und/oder Kunststoff und ist insbesondere ein Fass, ein Container, ein Hobbock, ein Eimer, ein Kanister, eine Büchse, ein Beutel, ein Schlauchbeutel, eine Kartusche oder eine Tube.

Die härtbare Zusammensetzung kann in Form einer einkomponentigen oder in Form einer mehrkomponentigen, insbesondere zweikomponentigen, Zusammensetzung vorliegen.

Die härtbare Zusammensetzung ist bevorzugt einkomponentig und feuchtigkeitshärtend. Sie ist bei geeigneter Verpackung und Aufbewahrung lagerstabil, typischerweise während mehreren Monaten bis zu einem Jahr oder länger.

In einer Ausführungsform ist die härtbare Zusammensetzung zweikomponentig und besteht aus einer ersten Komponente, welche mindestens ein Polyol enthält, und einer zweiten Komponente, welche mindestens ein Polyisocyanat und gegebenenfalls mindestens ein Isocyanatgruppen-haltiges Polymer enthält. Der latente Härter oder die beschriebene Säurelösung können jeweils in einer der beiden oder beiden Komponenten enthalten sein. Als Polyol geeignet sind insbesondere die vorgängig zur Herstellung von Isocyanatgruppen-haltigen Polymeren genannten Polyole.

Bei der Applikation der härtbaren Zusammensetzung beginnt der Prozess der Aushärtung.

Im Fall einer einkomponentigen feuchtigkeitshärtenden Zusammensetzung wird diese als solche appliziert und beginnt darauf unter dem Einfluss von Feuchtigkeit bzw. Wasser auszuhärten. Zur Beschleunigung der Aushärtung kann der Zusammensetzung bei der Applikation eine Beschleuniger-Komponente, welche Wasser und/oder einen Katalysator enthält oder freisetzt, zugemischt werden, oder die Zusammensetzung kann nach ihrer Applikation mit einer solchen Beschleuniger-Komponente in Kontakt gebracht werden.

Im Fall einer zweikomponentigen Zusammensetzung wird diese nach dem Vermischen der beiden Komponenten appliziert und beginnt dabei durch interne Reaktion auszuhärten, wobei die Aushärtung gegebenenfalls durch die Einwirkung von externer Feuchtigkeit vervollständigt wird. Das Vermischen der beiden Komponenten kann kontinuierlich oder batchweise mit dynamischen Mischern oder Statikmischern erfolgen.

Bei der Aushärtung reagieren vorhandene Isocyanatgruppen unter dem Einfluss von Feuchtigkeit miteinander und/oder mit gegebenenfalls in der Zusammensetzung vorhandenen weiteren Reaktivgruppen, insbesondere Hydroxylgruppen oder Aminogruppen. Weiterhin reagieren die Isocyanatgruppen mit den hydrolysierenden Reaktivgruppen der vorhandenen latenten Härter.

Die in der Zusammensetzung enthaltene Säurelösung beschleunigt insbesondere die Hydrolyse der latenten Härter und begünstigt eine schnelle, blasenfreie Aushärtung.

Die zur Aushärtung einer feuchtigkeitshärtenden Zusammensetzung benötigte Feuchtigkeit gelangt bevorzugt aus der Luft (Luftfeuchtigkeit) durch Diffusion in die Zusammensetzung. Dabei bildet sich an den mit Luft in Kontakt stehenden Oberflächen der Zusammensetzung eine feste Schicht ausgehärteter Zusammensetzung (Haut). Die Aushärtung setzt sich entlang der Diffusionsrichtung von aussen nach innen fort, wobei die Haut zunehmend dicker wird und schliesslich die ganze applizierte Zusammensetzung umfasst. Die Feuchtigkeit kann zusätzlich oder vollständig auch aus einem oder mehreren Substrat(en), auf welche(s) die Zusammensetzung appliziert wurde, in die Zusammensetzung gelangen und/oder aus einer Beschleuniger-Komponente stammen, welche der Zusammensetzung bei der Applikation zugemischt oder nach der Applikation mit dieser in Kontakt gebracht wird, beispielsweise durch Bestreichen oder Besprühen.

Die härtbare Zusammensetzung wird bevorzugt bei Umgebungstemperatur appliziert, insbesondere im Bereich von etwa -10 bis 50°C, bevorzugt im Bereich von - 5 bis 45°C, insbesondere 0 bis 40°C.

Die Aushärtung der Zusammensetzung erfolgt bevorzugt ebenfalls bei Umgebungstemperatur.

Die Zusammensetzung eignet sich für eine Vielzahl von Verwendungen.

Bevorzugt stellt die Zusammensetzung einen Klebstoff oder Dichtstoff oder eine Beschichtung dar.

Bevorzugt ist der Klebstoff oder Dichtstoff oder die Beschichtung elastisch.

Als Klebstoff und/oder Dichtstoff ist die härtbare Zusammensetzung insbesondere geeignet für Klebe- und Abdichtungsanwendungen in der Bau- und Fertigungsindustrie oder im Fahrzeugbau, insbesondere für die Parkettverklebung, Montage, Anbauteilverklebung, Modulverklebung, Scheibenverklebung, Fugenabdichtung, Karosserieabdichtung, Nahtabdichtung oder Hohlraumversiegelung.

Elastische Verklebungen im Fahrzeugbau sind beispielsweise das Ankleben von Teilen wie Kunststoffabdeckungen, Zierleisten, Flansche, Stosstangen, Führerkabinen oder andere Anbauteile an die lackierte Karosserie eines Fahrzeugs, oder das Einkleben von Scheiben in die Karosserie, wobei die Fahrzeuge insbesondere Automobile, Lastkraftwagen, Busse, Schienenfahrzeuge oder Schiffe darstellen.

Als Dichtstoff ist die härtbare Zusammensetzung insbesondere geeignet für das elastische Abdichten von Fugen, Nähten oder Hohlräumen aller Art, insbesondere von Fugen am Bau wie Dilatationsfugen oder Anschlussfugen zwischen Bauteilen, oder von Bodenfugen im Tiefbau.

Als Beschichtung ist die härtbare Zusammensetzung insbesondere geeignet zum Schutz und/oder zum Abdichten von Bauwerken oder Teilen davon, insbesondere für Balkone, Terrassen, Dächer, insbesondere Flachdächer oder schwach geneigte Dachflächen oder Dachgärten, oder im Innern von Gebäuden unter Fliesen oder Keramikplatten in Nasszellen oder Küchen, oder in Auffangwannen, Kanälen, Schächten, Silos, Tänken oder Abwasserbehandlungsanlagen.

Sie kann auch zu Reparaturzwecken als Abdichtung oder Beschichtung verwendet werden, beispielsweise von undichten Dachmembranen oder nicht mehr tauglichen Bodenbelägen, oder als Reparaturmasse für hochreaktive Spritzabdichtungen.

Die härtbare Zusammensetzung kann so formuliert sein, dass sie eine pastöse Konsistenz mit hoher Fliessgrenze aufweist, insbesondere für die Verwendung als Klebstoff oder Dichtstoff. Eine solche Zusammensetzung kann aufgespachtelt oder mittels einer geeigneten Vorrichtung unter Druck appliziert werden, beispielsweise mittels einer Kartuschenpistole oder einer Fasspumpe oder einem Applikationsroboter, wobei die Zusammensetzung insbesondere in Form einer Raupe mit einer im Wesentlichen runden oder dreieckigen Querschnittsfläche ausgetragen wird.

Die härtbare Zusammensetzung kann weiterhin so formuliert sein, dass sie flüssig und sogenannt selbstverlaufend oder nur leicht thixotrop ist, insbesondere für die Verwendung als Dichtmasse oder Beschichtung. Eine solche Zusammensetzung kann zur Applikation ausgegossen oder gespachtelt werden. Als Beschichtung kann sie anschliessend flächig bis zur gewünschten Schichtdicke verteilt werden, beispielsweise mittels einer Rolle, Rakel, Zahntraufel oder einem Gummiwischer. In einem Arbeitsgang wird typischerweise eine Schichtdicke im Bereich von 0.5 bis 5 mm, insbesondere 1 bis 3 mm, aufgetragen.

Geeignete Substrate, welche mit der härtbaren Zusammensetzung verklebt oder abgedichtet oder beschichtet werden können, sind insbesondere
- Glas, Glaskeramik, Beton, Mörtel, Zementestrich, Faserzement, insbesondere Faserzement-Platten, Backstein, Ziegel, Gips, insbesondere Gips-Platten oder Anhydrid-Estrich, oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Kupfer, Eisen, Stahl, Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen wie Phenol-, Melamin- oder Epoxidharzen gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Isolierschäume, insbesondere aus EPS, XPS, PUR, PIR, Steinwolle, Glaswolle oder geschäumtem Glas (Foamglas);
- beschichtete oder lackierte Substrate, insbesondere lackierte Fliesen, gestrichener Beton, pulverbeschichtete Metalle oder Legierungen oder lackierte Bleche;
- Farben oder Lacke, insbesondere Automobildecklacke.

Die Substrate können bei Bedarf vor dem Applizieren vorbehandelt werden, insbesondere durch physikalische und/oder chemische Reinigungsverfahren oder das Aufbringen eines Aktivators oder eines Primers.

Verklebt und/oder abgedichtet werden können gleichartige oder verschiedene Substrate.

Aus der Applikation und Aushärtung der härtbaren Zusammensetzung wird ein Artikel erhalten.

Ein weiterer Gegenstand der Erfindung ist somit ein Artikel, welcher mit der beschriebenen Zusammensetzung verklebt, abgedichtet oder beschichtet ist.

Der Artikel ist insbesondere ein Bauwerk des Hoch- oder Tiefbaus oder ein Teil davon, insbesondere eine Brücke, ein Dach, ein Treppenhaus oder eine Fassade, oder ein industrielles Gut oder ein Konsumgut, insbesondere ein Fenster, ein Rohr, ein Rotorblatt einer Windkraftanlage, eine Haushaltmaschine oder ein Transportmittel, insbesondere ein Automobil, ein Bus, ein Lastkraftwagen, ein Schienenfahrzeug, ein Schiff, ein Flugzeug oder ein Helikopter, oder ein Anbauteil davon.

Die härtbare Zusammensetzung weist vorteilhafte Eigenschaften auf. Sie ist sehr einfach herstellbar, insbesondere aufgrund der erfindungsgemässen Säurelösung, welche niedrigviskos ist und eine hohe Säurekonzentration ermöglicht. Sie härtet schnell, blasenfrei und ohne Geruchsbildung oder Emissionen aus und zeigt nach der Aushärtung aufgrund der guten Verträglichkeit der Säurelösung kaum Migrations-bedingte Fehler wie Ausschwitzen oder Staining.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1 °C und eine relative Luftfeuchtigkeit von 50±5% bezeichnet.

Die verwendeten Chemikalien waren, sofern nicht anders bezeichnet, von Sigma-Aldrich Chemie GmbH.
verwendete kommerzielle Weichmacher:
- DIDP:: Diisodecylphthalat (Palatinol^{®} 10-P, von BASF SE)
- DOA: Di(2-ethylhexyl)adipat (Piastonnoll^{®} DOA, von BASF SE)
- SPX-80: Verzweigtes Polyetherpolyol mit veresterten Hydroxylgruppen, und mittlerem Molekulargewicht ca. 5'000 g/mol (Sanflex^{®} SPX-80, von Sanyo Chem. Ind.)

### Herstellung von Polyethern mit blockierten Hydroxylgruppen:

Die **Viskosität** wurde mit einem thermostatisierten Kegel-Platten-Viskosimeter Rheotec RC30 (Kegeldurchmesser 25 mm, Kegelwinkel 1°, Kegelspitze-Platten-Abstand 0.05 mm, Scherrate 10 s⁻¹) gemessen.

**Infrarotspektren** (FT-IR) wurden als unverdünnte Filme auf einem mit horizontaler ATR-Messeinheit mit Diamant-Kristall ausgestatteten FT-IR Gerät Nicolet iS5 von Thermo Scientific gemessen. Die Absorptionsbanden sind in Wellenzahlen (cm⁻¹) angegeben.

**¹H-NMR-Spektren** wurden auf einem Spektrometer des Typs Bruker Ascend 400 bei 400.14 MHz gemessen; die chemischen Verschiebungen δ sind angegeben in ppm relativ zu Tetramethylsilan (TMS). Echte und Pseudo-Kopplungsmuster wurden nicht unterschieden.

### Polyether-1: n-Butanol-gestartetes acetyliertes PPG-Monol mit mittlerem Molekulargewicht ca. 800 g/mol

120.00 g n-Butanol-gestartetes Polyoxypropylen-Monol (Synalox^{®} 100-20B, mittleres Molekulargewicht ca. 750 g/mol; vonDowDuPont Inc.) und 18.74 g Essigsäureanhydrid wurden in einem Rundkolben mit Destillieraufsatz unter Stickstoffatmosphäre vorgelegt. Dann wurde die Reaktionsmischung bei 130 °C unter leichtem Stickstoffstrom gerührt, wobei als Destillat Essigsäure aufgefangen wurde. Anschliessend wurden bei 80°C und 10 mbar Vakuum die flüchtigen Bestandteile aus der Reaktionsmischung entfernt. Es wurde eine klare, farblose Flüssigkeit mit einer Viskosität von 75 mPa·s bei 20°C erhalten.

FT-IR: 2970, 2931, 2867, 1738, 1454, 1372, 1345, 1296, 1241, 1098, 1014, 959, 925, 866, 827.

¹H-NMR (CDCl₃): 5.02 (hept., 1 H, CH₂(CH₃)C*H*-OAc), 3.75 - 3.34 (2 x m, ca. 39 H, OC*H*₂C*H*(CH₃)O), 3.33 - 3.28 (m, 2 H, CH₃CH₂CH₂C*H*₂O), 2.04 (s, 3 H, O(CO)C*H₃*), 1.55 (quint., 2 H, CH₃CH₂C*H₂*CH₂O), 1.36 (sext., 2 H, CH₃C*H₂*CH₂CH₂O), 1.22 (d, 3 H, CH₂(C*H₃*)CH-OAc), 1.17 - 1.10 (m, ca. 36 H, OCH₂CH(C*H₃*)O), 0.91 (t, 3 H, C*H₃*CH₂CH₂CH₂O).

### Polyether-2: n-Butanol-gestartetes acetyliertes PPG-Monol mit mittlerem Molekulargewicht ca. 1'150 g/mol

176.00 g n-Butanol-gestartetes Polyoxypropylen-Monol (Synalox^{®} 100-40B, mittleres Molekulargewicht ca. 1'100 g/mol; von DowDuPont Inc.) und 18.74 g Essigsäureanhydrid wurden wie für **Polyether-1** beschrieben umgesetzt. Es wurde eine klare, farblose Flüssigkeit mit einer Viskosität von 140 mPa·s bei 20°C erhalten.

### Polyether-3: n-Butanol-gestartetes acetyliertes PPG-Monol mit mittlerem Molekulargewicht ca. 1'850 g/mol

288.00 g n-Butanol-gestartetes Polyoxypropylen-Monol (Synalox^{®} 100-85B, mittleres Molekulargewicht ca. 1'800 g/mol; von DowDuPont Inc.) und 18.74 g Essigsäureanhydrid wurden wie für **Polyether-1** beschrieben umgesetzt. Es wurde eine klare, farblose Flüssigkeit mit einer Viskosität von 350 mPa·s bei 20°C erhalten.

### Polyether-4: Diacetyliertes PPG-Diol mit mittlerem Molekulargewicht ca. 800 g/mol

58.00 g Polyoxypropylen-Diol (Polypropylenglycol, mittleres Molekulargewicht ca. 725 g/mol; von Sigma Aldrich Chemie GmbH) und 18.74 g Essigsäureanhydrid wurden wie für **Polyether-1** beschrieben umgesetzt. Es wurde eine klare, farblose Flüssigkeit mit einer Viskosität von 100 mPa·s bei 20 °C erhalten.

### Polyether-5: Diacetyliertes PPG-Diol mit mittlerem Molekulargewicht ca. 1'100 g/mol

80.00 g Polyoxypropylen-Diol (Voranol ^{®} P 1010, OH-Zahl 110 mg KOH/g; von DowDuPont Inc.) und 18.74 g Essigsäureanhydrid wurden wie für **Polyether-1** beschrieben umgesetzt. Es wurde eine klare, farblose Flüssigkeit mit einer Viskosität von 145 mPa·s bei 20°C erhalten.

### Polyether-6: Diacetyliertes PPG-Diol mit mittlerem Molekulargewicht ca. 2'100 g/mol

160.00 g Polyoxypropylen-Diol (Voranol ^{®} 2000 L, OH-Zahl 56 mg KOH/g; von DowDuPont Inc.) und 18.74 g Essigsäureanhydrid wurden wie für **Polyether-1** beschrieben umgesetzt. Es wurde eine klare, farblose Flüssigkeit mit einer Viskosität von 400 mPa·s bei 20°C erhalten.

### Polyether-7: Diacetyliertes PPG-Diol mit mittlerem Molekulargewicht ca. 4'100 g/mol

600.0 g Polyoxypropylen-Diol (Acclaim^{®} 4200, OH-Zahl 28 mg KOH/g; von Covestro AG) und 33.7 g Essigsäureanhydrid wurden wie für **Polyether-1** beschrieben umgesetzt. Es wurde eine klare, farblose Flüssigkeit mit einer Viskosität von 1'50 mPa·s bei 20°C erhalten.

### Polyether-8: Diacetyliertes PPG-Diol mit mittlerem Molekulargewicht ca. 8'100 g/mol

600.0 g Polyoxypropylen-Diol (Acclaim^{®} 8200, OH-Zahl 14 mg KOH/g; von Covestro AG) und 16.8 g Essigsäureanhydrid wurden wie für **Polyether-1** beschrieben umgesetzt. Es wurde eine klare, farblose Flüssigkeit mit einer Viskosität von 3'800 mPa·s bei 20°C erhalten.

### Polyether-9: Triacetyliertes PPG-Triol mit mittlerem Molekulargewicht ca. 850 g/mol

74.40 g Polyoxypropylen-Triol (Desmophen ^{®} 28HS98, OH-Zahl 230 mg KOH/g; von Covestro AG) und 37.48 g Essigsäureanhydrid wurden wie für **Polyether-1** beschrieben umgesetzt. Es wurde eine klare, farblose Flüssigkeit mit einer Viskosität von 135 mPa·s bei 20°C erhalten.

### Polyether-10: Triacetyliertes PPG-Triol mit mittlerem Molekulargewicht ca. 1650 g/mol

80.00 g Polyoxypropylen-Triol (Arcol^{®} LHT-112, OH-Zahl 112 mg KOH/g; von Covestro AG) und 18.74 g Essigsäureanhydrid wurden wie für **Polyether-1** beschrieben umgesetzt. Es wurde eine klare, farblose Flüssigkeit mit einer Viskosität von 285 mPa·s bei 20°C erhalten.

### Polyether-11: Triacetyliertes PPG-Triol mit mittlerem Molekulargewicht ca. 3150 g/mol

160.00 g Polyoxypropylen-Triol (Desmophen^{®} 3061 BT, OH-Zahl 56 mg KOH/g; von Covestro AG) und 18.74 g Essigsäureanhydrid wurden wie für **Polyether-1** beschrieben umgesetzt. Es wurde eine klare, farblose Flüssigkeit mit einer Viskosität von 575 mPa·s bei 20°C erhalten.

### Herstellung von Säurelösungen:

### Lösung L-1 bis L-24

5 g des in der Tabelle 1 genannten Lösemittels wurde in einem Pillenglas vorgelegt, mit soviel Salicylsäure oder 2-Nitrobenzoesäure versetzt, dass eine Konzentration von 2.0 bzw. 4.8 bzw. 9.1 bzw. 13.0 bzw. 16.7 bzw. 20.0 bzw. 23.1 Gewichts-% Säure (100% = Säure plus Lösemittel) entstand und die Mischung in einem Umluftofen auf 80°C aufgeheizt. Anschliessend wurde jeweils versucht, die Säure mittels Rühren vollständig zu lösen. Falls dies gelang, wurde die Lösung anschliessend während 7 Tagen in einem Umluftofen bei 50°C, dann weitere 7 Tage bei 23°C und schliesslich weitere 7 Tage in einem Kühlschrank bei 4°C aufbewahrt und am Ende der Lagerzeit bei 50 bzw. 23 bzw. 4°C jeweils beurteilt, ob aus der Lösung Säure auskristallisiert war. Als maximale stabile Konzentration wurde diejenige Konzentration der Lösung bezeichnet, bei welcher bei 4°C innerhalb von 7 Tagen kein Auskristallisieren der Säure beobachtet wurde.

### Die Resultate sind in der Tabelle 1 angegeben.

Mit (Ref.) bezeichnete Beispiele sind Vergleichsbeispiele.

**Tabelle 1: Säurelösungen mit maximaler stabiler Konzentration.**

| **Lösemittel** | **Lösung** | **Salicylsäure** | **Lösung** | **2-Nitrobenzoesäure** |
|---|---|---|---|---|
| **Polyether-1** | **L-1** | 16.7 % | **L-2** | 13.0 % |
| **Polyether-2** | **L-3** | 20.0 % | **L-4** | 16.7 % |
| **Polyether-3** | **L-5** | 20.0 % | **L-6** | 16.7 % |
| **Polyether-4** | **L-7** | 16.7 % | **L-8** | 16.7 % |
| **Polyether-5** | **L-9** | 16.7 % | **L-10** | 13.0 % |
| **Polyether-6** | **L-11** | 20.0 % | **L-12** | 16.7 % |
| **Polyether-9** | **L-13** | 16.7 % | **L-14** | 16.7 % |
| **Polyether-10** | **L-15** | 20.0 % | **L-16** | 16.7 % |
| **Polyether-11** | **L-17** | 20.0 % | **L-18** | 16.7 % |
| SPX-80 | **L-19** | 16.7 % | **L-20** | 13.0 % |
| DIDP (Ref.) | **L-21 (Ref.)** | 2.0 % | **L-22 (Ref.)** | 2.0 % |
| DOA (Ref.) | **L-23 (Ref.)** | 4.8 % | **L-24 (Ref.)** | 2.0 % |

### Lösungen L-25 bis L-38

Es wurde jeweils eine 10 %-ige Säurelösung hergestellt, indem 1.0 g der in der Tabelle 2 genannten Säure in 9.0 g des in der Tabelle 2 genannten Lösemittels gelöst und in einem verschlossenen Gebinde aufbewahrt wurden.

Von jeder Lösung wurde die Viskosität bei 20 °C wie vorgängig beschrieben gemessen.

Die Resultate sind in der Tabelle 2 angegeben.

**Tabelle 2: Viskosität der Lösungen L-25 bis L-38 (10 %-ige Lösungen)**

| **Lösung** | **Lösemittel** | **Säure** | **Viskosität** |
|---|---|---|---|
| **L-25** | **Polyether-1** | p-Toluolsulfonsäure | 115 mPa·s |
| **L-26** | **Polyether-1** | 2-Nitrobenzoesäure | 120 mPa·s |
| **L-27** | **Polyether-1** | Salicylsäure | 105 mPa·s |
| **L-28** | **Polyether-2** | Salicylsäure | 235 mPa·s |
| **L-29** | **Polyether-3** | Salicylsäure | 600 mPa·s |
| **L-30** | **Polyether-4** | Salicylsäure | 160 mPa·s |
| **L-31** | **Polyether-5** | Salicylsäure | 230 mPa·s |
| **L-32** | **Polyether-6** | Salicylsäure | 640 mPa·s |
| **L-33** | **Polyether-7** | Salicylsäure | 2'140 mPa·s |
| **L-34** | **Polyether-8** | Salicylsäure | 5'550 mPa·s |
| **L-35** | **Polyether-9** | Salicylsäure | 220 mPa·s |
| **L-36** | **Polyether-10** | Salicylsäure | 455 mPa·s |
| **L-37** | **Polyether-11** | Salicylsäure | 840 mPa·s |
| **L-38** | SPX-80 | Salicylsäure | 1'420 mPa·s |

Herstellung von härtbaren Zusammensetzungen (einkomponentig):

### Polymer P1:

400 g Polyoxypropylen-Diol (Acclaim^{®} 4200, von Covestro AG; OH-Zahl 28.5 mg KOH/g) und 52 g 4,4'-Diphenylmethandiisocyanat (Desmodur^{®} 44 MC L, von Covestro AG) wurden nach bekanntem Verfahren bei 80 °C zu einem bei Raumtemperatur flüssigen, NCO-terminierten Polymer mit einem Isocyanatgruppen-Gehalt von 1.85 Gewichts-% umgesetzt.

### Polymer P2:

1'300 g Polyoxypropylen-Diol (Acclaim^{®} 4200, von Covestro AG; OH-Zahl 28 mg KOH/g), 2'600 g Ethylenoxid-terminiertes Polyoxypropylen-Triol (Voranol^{®} CP 4755, von DowDuPont Inc.; OH-Zahl 35 mg KOH/g), 600 g 4,4'-Diphenylmethandiisocyanat (Desmodur^{®} 44 MC L, von Covestro AG) und 500 g Diisodecylphthalat wurden nach bekanntem Verfahren bei 80 °C zu einem bei Raumtemperatur flüssigen, NCO-terminierten Polymer mit einem Isocyanatgruppen-Gehalt von 2.05 Gewichts-% umgesetzt.

### Aldimin-1: N,N'-Bis(2,2-dimethyl-3-lauroyloxypropyliden)-3-aminomethyl-3,5,5-trimethylcyclohexylamin (= latenter Härter)

598 g (2.1 mol) 2,2-Dimethyl-3-lauroyloxypropanal wurden unter Stickstoffatmosphäre in einem Rundkolben vorgelegt. Dann wurden 170.3 g (1 mol) 3-Aminomethyl-3,5,5-trimethylcyclohexylamin (Vestamin^{®} IPD von Evonik Industries AG) unter gutem Rühren zugegeben und anschliessend die flüchtigen Bestandteile bei 80 °C und 10 mbar Vakuum entfernt. Erhalten wurden 732 g einer farblosen Flüssigkeit mit einem Amingehalt von 2.73 mmol N/g, was einem berechneten Aldimin-Equivalentgewicht von 367 g/mol entspricht.

### Zusammensetzungen Z1 bis Z9

Für jede Zusammensetzung wurden die in den Tabellen 3 bis 4 angegebenen Inhaltsstoffe in den angegebenen Mengen (in Gewichtsteilen) mittels eines Zentrifugalmischers (SpeedMixer^{™} DAC 150, FlackTek Inc.) unter Feuchtigkeitsausschluss während einer Minute bei 3000 rpm vermischt und unter Feuchtigkeitsausschluss aufbewahrt.

Jede Zusammensetzung wurde folgendermassen geprüft:
Die **Viskosität** wurde mit einem thermostatisierten Kegel-Platten-Viskosimeter Rheotec RC30 (Kegeldurchmesser 25 mm, Kegelwinkel 1°, Kegelspitze-Platten-Abstand 0.05 mm) bei der angegebenen Temperatur gemessen, wobei die Scherrate bei den Messungen bei 0 °C 5 s⁻¹ und bei den Messungen bei 10 °C, 20 °C und 30 °C 10 s⁻¹ betrug.

Als Mass für die Offenzeit wurde die Hautbildungszeit **(HBZ)** bestimmt. Dazu wurden einige Gramm der Zusammensetzung in einer Schichtdicke von ca. 2 mm auf Pappkarton aufgetragen und im Normklima die Zeitdauer bestimmt, bis beim leichten Antippen der Oberfläche der Zusammensetzung mittels einer Pipette aus LDPE erstmals keine Rückstände auf der Pipette mehr zurückblieben.

Die **Shore A** Härte wurde bestimmt nach DIN 53505 an während 14 Tagen im Normklima ausgehärteten Prüfkörpern.

Zur Bestimmung der mechanischen Eigenschaften wurde die Zusammensetzung auf eine PTFE-beschichteten Folie zu einem Film von 2 mm Dicke aufgebracht, dieser während 14 Tagen im Normklima gelagert, einige Hanteln mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf **Zugfestigkeit** (Bruchkraft), **Bruchdehnung, E-Modul 5%** (bei 0.5-5% Dehnung) und **E-Modul 25%** (bei 0.5-25% Dehnung) geprüft. Der **Aspekt** wurde visuell an den hergestellten Filmen beurteilt. Als "schön" wurde ein nichtklebriger Film ohne Blasen bezeichnet.

Der **Geruch** wurde durch Riechen mit der Nase im Abstand von 2 cm an den frisch hergestellten Filmen beurteilt. "Nein" bedeutet, dass kein Geruch wahrnehmbar war.

Die Resultate sind in den Tabellen 3 bis 4 angegeben.

**Tabelle 3: Zusammensetzung (in Gewichtsteilen) und Eigenschaften von Z1 bis Z3.**

| **Zusammensetzung** | | **Z1** | **Z2** | **Z3** |
|---|---|---|---|---|
| Polymer **P1** | | 39.50 | 39.50 | 39.50 |
| HDI-Trimer¹ | | 0.50 | 0.50 | 0.50 |
| **Aldimin-1** | | 5.00 | 5.00 | 5.00 |
| Weichmacher | | **DIDP** | **Polyether-1** | **Polyether-5** |
| | | 20.70 | 20.70 | 20.70 |
| Russ² | | 20.00 | 20.00 | 20.00 |
| Kreide³ | | 13.47 | 13.47 | 13.47 |
| **Lösung** | | **L-27** | **L-27** | **L-31** |
| | | 0.80 | 0.80 | 0.80 |
| DBTDL⁴ | | 0.03 | 0.03 | 0.03 |
| Viskosität [Pa·s] | 0°C | 721 | 467 | 623 |
| | 10°C | 286 | 169 | 229 |
| | 20°C | 132 | 102 | 125 |
| | 30°C | 90 | 69 | 82 |
| HBZ [min] | | 40 | 40 | 40 |
| Shore A | | 45 | 39 | 41 |
| Zugfestigkeit [MPa] | | 1.68 | 1.02 | 1.33 |
| Bruchdehnung [%] | | 670 | 422 | 623 |
| E-Modul 5% [MPa] | | 2.52 | 2.14 | 2.50 |
| E-Modul 25% [MPa] | | 1.56 | 1.19 | 1.38 |
| Aspekt | | schön | schön | schön |
| Geruch | | nein | nein | nein |

| | | | | |
|---|---|---|---|---|
| ¹ Desmodur^{®} N 3300, NCO-Gehalt 21.8 Gew.-% (von Covestro AG) ² Monarch^{®} 570 (von Cabot Corp.) ³ Omyacarb^{®} 5-GU (von Omya AG) ⁴ Dibutylzinndilaurat | | | | |

**Tabelle 4: Zusammensetzung (in Gewichtsteilen) und Eigenschaften von Z4 bis Z9.**

| **Zusammensetzung** | | **Z4** | **Z5** | **Z6** | **Z7** | **Z8** | **Z9** |
|---|---|---|---|---|---|---|---|
| Polymer **P2** | | 40.0 | 40.0 | 40.0 | 40.0 | 40.0 | 40.0 |
| **Aldimin-1** | | 5.5 | 5.5 | 5.5 | 5.5 | 5.5 | 5.5 |
| Weichmacher | | **DIDP** | **DIDP** | **Polyether-1** | **Polyether-5** | **Polyether-6** | **Polyether-7** |
| | | 20.7 | 20.7 | 20.7 | 20.7 | 20.7 | 20.7 |
| Russ¹ | | 20.0 | 20.0 | 20.0 | 20.0 | 20.0 | 20.0 |
| Kreide² | | 13.0 | 13.0 | 13.0 | 13.0 | 13.0 | 13.0 |
| **Lösung** | | **L-31** | **L-32** | **L-27** | **L-31** | **L-32** | **L-33** |
| | | 0.8 | 0.8 | 0.8 | 0.8 | 0.8 | 0.8 |
| Viskosität [Pa·s] | 0°C | 1076 | 1089 | 734 | 1046 | 1297 | 1487 |
| | 10°C | 306 | 331 | 202 | 292 | 517 | 647 |
| | 20°C | 156 | 161 | 118 | 164 | 207 | 253 |
| | 30°C | 95 | 99 | 80 | 107 | 132 | 151 |
| HBZ [min] | | 15 | 15 | 20 | 15 | 15 | 20 |
| Shore A | | 58 | 57 | 53 | 55 | 50 | 49 |
| Zugfestigkeit [MPa] | | 8.9 | 7.8 | 8.2 | 9.0 | 7.9 | 7.2 |
| Bruchdehnung [%] | | 664 | 626 | 630 | 665 | 720 | 657 |
| E-Modul 5% [MPa] | | 3.30 | 3.42 | 2.76 | 3.04 | 2.29 | 2.59 |
| E-Modul 25% [MPa] | | 2.61 | 2.66 | 2.22 | 2.38 | 1.82 | 2.04 |
| Aspekt | | schön | schön | schön | schön | schön | schön |
| Geruch | | nein | nein | nein | nein | nein | nein |

| | | | | | | | |
|---|---|---|---|---|---|---|---|
| ¹ Monarch^{®} 570 (von Cabot Corp.) ² Omyacarb^{®} 5-GU (von Omya AG) | | | | | | | |

## Patentansprüche

1. Verwendung von mindestens einem Polyether mit blockierten Hydroxylgruppen als Lösemittel für mindestens eine aromatische Carbon- oder Sulfonsäure.

2. Verwendung gemäss Anspruch 1, **dadurch gekennzeichnet, dass** die blockierten Hydroxylgruppen ausgewählt sind aus der Gruppe bestehend aus Ester-, Acetoester-, Carbonat- und Urethangruppen.

3. Verwendung gemäss einem der Ansprüche 1 oder 2, **dadurch gekennzeichnet, dass** die blockierten Hydroxylgruppen Acetatgruppen sind.

4. Verwendung gemäss einem der Ansprüche 1 bis 3, **dadurch gekennzeichnet, dass** im Polyether 70 bis 100 Gewichts-% der Repetiereinheiten aus 1,2-Propylenoxy-Gruppen und 0 bis 30 Gewichts-% der Repetiereinheiten aus 1,2-Ethylenoxy-Gruppen bestehen.

5. Verwendung gemäss einem der Ansprüche 1 bis 4, **dadurch gekennzeichnet, dass** der Polyether mit blockierten Hydroxylgruppen ein mittleres Molekulargewicht Mₙ im Bereich von 600 bis 10'000 g/mol aufweist, bestimmt mittels Gelpermeationschromatographie (GPC) gegen Polystyrol als Standard mit Tetrahydrofuran als mobiler Phase, Brechungsindex-Detektor und Auswertung ab 200 g/mol.

6. Verwendung gemäss einem der Ansprüche 1 bis 5, **dadurch gekennzeichnet, dass** der Polyether mit blockierten Hydroxylgruppen abgeleitet ist von mindestens einem hydroxyfunktionellen Polyether ausgewählt aus der Gruppe bestehend aus
- Alkohol-, insbesondere n-Butanol-, gestarteten Polyoxypropylen-Monolen mit einer OH-Zahl im Bereich von 25 bis 90 mg KOH/g,
- Polyoxypropylen-Diolen mit einer OH-Zahl im Bereich von 12 bis 155 mg KOH/g,
- Trimethylolpropan- oder insbesondere Glycerin-gestarteten, gegebenenfalls Ethylenoxid-terminierten, Polyoxypropylen-Triolen mit einer mittleren OH-Funktionalität im Bereich von 2.2 bis 3 und einer OH-Zahl im Bereich von 22 bis 230 mg KOH/g, und
- Zuckeralkohol-gestarteten Polyoxypropylenpolyolen mit einer mittleren OH-Funktionalität im Bereich von 3 bis 6, insbesondere mit Threit, Erythrit, Xylit, Mannit oder Sorbit als Startermolekül.

7. Verwendung gemäss einem der Ansprüche 1 bis 6, **dadurch gekennzeichnet, dass** die aromatische Carbon- oder Sulfonsäure ausgewählt ist aus der Gruppe bestehend aus Benzoesäure, 2-Nitrobenzoesäure, Salicylsäure und p-Toluolsulfonsäure.

8. Säurelösung, erhalten aus der Verwendung gemäss einem der Ansprüche 1 bis 7.

9. Säurelösung gemäss Anspruch 8, **dadurch gekennzeichnet, dass** 2.5 bis 25 Gewichts-% aromatische Carbon- oder Sulfonsäure und 50 bis 97.5 Gewichts-% Polyether mit blockierten Hydroxylgruppen enthaltend sind.

10. Härtbare Zusammensetzung enthaltend die Säurelösung gemäss einem der Ansprüche 8 bis 9.

11. Härtbare Zusammensetzung gemäss Anspruch 10, **dadurch gekennzeichnet, dass** diese
- mindestens ein Polyisocyanat oder Isocyanatgruppen-haltiges Polymer,
- mindestens einen latenten Härter, welcher mindestens eine Aldimino-, Ketimino-, Enamino- oder Oxazolidinogruppe aufweist,
- mindestens einen Polyether mit blockierten Hydroxylgruppen, und
- mindestens eine aromatische Carbon- oder Sulfonsäure umfasst.

12. Härtbare Zusammensetzung gemäss Anspruch 11, **dadurch gekennzeichnet, dass** der latente Härter ein Aldimin der Formel 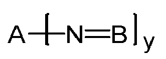 ist, wobei y für 2 oder 3, A für einen organischen Rest mit 2 bis 23 C-Atomen und B für einen organischen Rest mit 6 bis 30 C-Atomen stehen.

13. Härtbare Zusammensetzung gemäss einem der Ansprüche 11 bis 12, **dadurch gekennzeichnet, dass** sie einkomponentig und feuchtigkeitshärtend ist.

14. Härtbare Zusammensetzung gemäss einem der Ansprüche 10 bis 13, **dadurch gekennzeichnet, dass** sie einen Klebstoff oder Dichtstoff oder eine Beschichtung darstellt.

15. Artikel, welcher mit einer härtbaren Zusammensetzung gemäss einem der Ansprüche 10 bis 14 verklebt, abgedichtet oder beschichtet ist.

## Claims

1. The use of at least one polyether having blocked hydroxyl groups as solvent for at least one aromatic carboxylic or sulfonic acid.

2. The use as claimed in claim 1, **characterized in that** the blocked hydroxyl groups are selected from the group consisting of ester, aceto ester, carbonate and urethane groups.

3. The use as claimed in either of claims 1 and 2, **characterized in that** the blocked hydroxyl groups are acetate groups.

4. The use as claimed in any of claims 1 to 3, **characterized in that** 70% to 100% by weight of the repeat units in the polyether consist of 1,2-propyleneoxy groups, and 0% to 30% by weight of the repeat units consist of 1,2-ethyleneoxy groups.

5. The use as claimed in any of claims 1 to 4, **characterized in that** the polyether having blocked hydroxyl groups has an average molecular weight Mₙ in the range from 600 to 10'000 g/mol, determined by means of gel permeation chromatography (GPC) versus polystyrene as standard with tetrahydrofuran as mobile phase, refractive index detector and evaluation from 200 g/mol.

6. The use as claimed in any of claims 1 to 5, **characterized in that** the polyether having blocked hydroxyl groups is derived from at least one hydroxy-functional polyether selected from the group consisting of
- alcohol-started, especially n-butanol-started, polyoxypropylene monools having an OH number in the range from 25 to 90 mg KOH/g,
- polyoxypropylene diols having an OH number in the range from 12 to 155 mg KOH/g,
- trimethylolpropane- or especially glycerol-started, optionally ethylene oxide-terminated polyoxypropylene triols having an average OH functionality in the range from 2.2 to 3 and an OH number in the range from 22 to 230 mg KOH/g, and
- sugar alcohol-started polyoxypropylene polyols having an average OH functionality in the range from 3 to 6, especially with threitol, erythritol, xylitol, mannitol or sorbitol as starter molecule.

7. The use as claimed in any of claims 1 to 6, **characterized in that** the aromatic carboxylic or sulfonic acid is selected from the group consisting of benzoic acid, 2-nitrobenzoic acid, salicylic acid and p-toluenesulfonic acid.

8. An acid solution obtained from the use as claimed in any of claims 1 to 7.

9. The acid solution as claimed in claim 8, **characterized in that** 2.5% to 25% by weight of aromatic carboxylic or sulfonic acid and 50% to 97.5% by weight of polyether having blocked hydroxyl groups are present.

10. A curable composition comprising the acid solution as claimed in either of claims 8 and 9.

11. The curable composition as claimed in claim 10, **characterized in that** it comprises
- at least one polyisocyanate or polymer containing isocyanate groups,
- at least one latent curing agent having at least one aldimino, ketimino, enamino or oxazolidino group,
- at least one polyether having blocked hydroxyl groups, and
- at least one aromatic carboxylic or sulfonic acid.

12. The curable composition as claimed in claim 11, **characterized in that** the latent curing agent is an aldimine of the formula 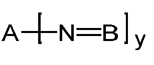 where y is 2 or 3, A is an organic radical having 2 to 23 carbon atoms, and B is an organic radical having 6 to 30 carbon atoms.

13. The curable composition as claimed in either of claims 11 and 12, **characterized in that** it is a one-component moisture-curing composition.

14. The curable composition as claimed in any of claims 10 to 13, **characterized in that** it is an adhesive or sealant or a coating.

15. An article bonded or sealed or coated with a curable composition as claimed in any of claims 10 to 14.

## Revendications

1. Utilisation d'au moins un polyéther comportant des groupes hydroxyle bloqués en tant que solvant pour au moins un acide carboxylique ou sulfonique aromatique.

2. Utilisation selon la revendication 1, **caractérisée en ce que** les groupes hydroxyle bloqués sont choisis dans le groupe consistant en les groupes ester, acétoester, carbonate et uréthane.

3. Utilisation selon l'une des revendications 1 ou 2, **caractérisée en ce que** les groupes hydroxyle bloqués sont des groupes acétate.

4. Utilisation selon l'une des revendications 1 à 3, **caractérisée en ce que**, dans le polyéther, 70 à 100 % en poids des motifs répétitifs sont constitués de groupes 1,2-propylénoxy et 0 à 30 % en poids des motifs répétitifs sont constitués de groupes 1,2-éthylénoxy.

5. Utilisation selon l'une des revendications 1 à 4, **caractérisée en ce que** le polyéther comportant des groupes hydroxyle bloqués présente une masse moléculaire moyenne Mₙ dans la plage de 600 à 10 000 g/mol, déterminée par chromatographie par perméation de gel (CPG) contre du polystyrène servant d'étalon, avec du tétrahydrofurane en tant que phase mobile, par un détecteur d'indice de réfraction et une évaluation à partir de 200 g/mol.

6. Utilisation selon l'une des revendications 1 à 5, **caractérisée en ce que** le polyéther comportant des groupes hydroxyle bloqués dérive d'au moins un polyéther hydroxy-fonctionnel choisi dans le groupe consistant en
- les polyoxypropylène-monools obtenus à partir d'un alcool, en particulier le n-butanol, ayant un indice d'OH dans la plage de 25 à 90 mg KOH/g,
- les polyoxypropylène-diols ayant un indice d'OH dans la plage de 12 à 155 mg KOH/g,
- les polyoxypropylène-triols, obtenus à partir de triméthylolpropane ou en particulier de glycérol, éventuellement à terminaison oxyde d'éthylène, ayant une fonctionnalité OH dans la plage de 2,2 à 3 et un indice d'OH dans la plage de 22 à 230 mg KOH/g, et
- les polyoxypropylène-polyols obtenus à partir d'alcool de sucre, ayant une fonctionnalité OH moyenne dans la plage de 3 à 6, en particulier avec du thréitol, de l'érythritol, du xylitol, du mannitol ou de sorbitol en tant que molécule de départ.

7. Utilisation selon l'une des revendications 1 à 6, **caractérisée en ce que** l'acide carboxylique ou sulfonique aromatique est choisi dans le groupe consistant en l'acide benzoïque, l'acide 2-nitrobenzoïque, l'acide salicylique et l'acide p-toluènesulfonique.

8. Solution d'un acide, obtenue par l'utilisation selon l'une des revendications 1 à 7.

9. Solution d'un acide selon la revendication 8, **caractérisée en ce qu'**elle contient 2,5 à 25 % en poids d'un acide carboxylique ou sulfonique aromatique et 50 à 97,5 % en poids d'un polyéther comportant des groupes hydroxyle bloqués.

10. Composition durcissable contenant la solution d'un acide selon l'une des revendications 8 à 9.

11. Composition durcissable selon la revendication 10, **caractérisée en ce qu'**elle comprend
- au moins un polyisocyanate ou un polymère contenant des groupes isocyanate,
- au moins un durcisseur latent, qui comprend au moins un groupe aldimino, cétimino, énamino ou oxazolidino,
- au moins un polyéther comportant des groupes hydroxyle bloqués, et
- au moins un acide carboxylique ou sulfonique aromatique.

12. Composition durcissable selon la revendication 11, **caractérisée en ce que** le durcisseur latent est une aldimine de formule 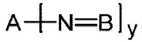 dans laquelle y représente 2 ou 3, A un radical organique ayant 2 à 23 atomes de carbone et B un radical organique ayant 6 à 30 atomes de carbone.

13. Composition durcissable selon l'une des revendications 11 à 12, **caractérisée en ce qu'**elle est monocomposant et peut durcir à l'humidité.

14. Composition durcissable selon l'une des revendications 10 à 13, **caractérisée en ce qu'**elle représente un adhésif ou un produit d'étanchéité ou un revêtement.

15. Article qui est collé, rendu étanche ou revêtu à l'aide d'une composition durcissable selon l'une des revendications 10 à 14.
